(19) Europäisches Patentamt
European Patent Office
Office européen des brevets

(11) EP 1 192 192 B1

# (12) FASCICULE DE BREVET EUROPEEN

(45) Date de publication et mention de la délivrance du brevet:
**26.03.2003 Bulletin 2003/13**

(21) Numéro de dépôt: **00920844.8**

(22) Date de dépôt: **19.04.2000**

(51) Int Cl.$^7$: **C08F 8/50**

(86) Numéro de dépôt international:
**PCT/FR00/01026**

(87) Numéro de publication internationale:
**WO 00/063260 (26.10.2000 Gazette 2000/43)**

(54) **PROCEDE DE FABRICATION D'UNE RESINE DE POLYPROPYLENE A RHEOLOGIE CONTROLEE**

VERFAHREN ZUR HERSTELLUNG VON POLYPROPYLENHARZEN MIT KONTROLLIERTER RHEOLOGIE

METHOD FOR THE PRODUCTION OF A CONTROLLED RHEOLOGICAL POLYPROPYLENE RESIN

(84) Etats contractants désignés:
**AT BE CH CY DE DK ES FI FR GB GR IE IT LI LU MC NL PT SE**

(30) Priorité: **19.04.1999 FR 9904888**

(43) Date de publication de la demande:
**03.04.2002 Bulletin 2002/14**

(73) Titulaire: **Atofina**
**92800 Puteaux (FR)**

(72) Inventeurs:
- **BERTIN, Denis**
  **F-76970 Motteville (FR)**
- **ROBERT, Patrice**
  **F-27470 Serquigny (FR)**

(74) Mandataire: **Chaillot, Geneviève**
**Cabinet CHAILLOT,**
**16-20, avenue de L'Agent Sarre,**
**B.P. 74**
**92703 Colombes Cédex (FR)**

(56) Documents cités:
**EP-A- 0 264 156**
**EP-A- 0 632 062**
**EP-A- 0 837 080**
**EP-A- 0 853 090**
**WO-A-85/01508**
**WO-A-97/49737**
**DE-A- 1 694 563**
**FR-A- 2 132 780**

EP 1 192 192 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention porte sur un procédé de fabrication d'une résine à rhéologie contrôlée d'un homopropylène ou d'un copolymère du propylène (copolymère à blocs ou statistique), ou d'une composition de polymères comportant un homo- ou copolymère du propylène.

A l'heure actuelle, cette technique de contrôle de la rhéologie de ces homo- et copolymères consiste en une dégradation peroxydique de ces derniers et elle est utilisée pour mettre au point des produits fluides de façon rationnelle sans se pénaliser au niveau des débits de fabrication en minimisant le nombre de poudres de base en polymérisation.

Ainsi, on réalise, à partir d'un même polymère ou copolymère (généralement visqueux), divers produits d'indices de fluidité supérieurs à celui de la base, en introduisant un peroxyde à l'extrusion en sortie du réacteur de polymérisation. Le peroxyde se décompose dans l'extrudeuse pour créer des radicaux qui eux-mêmes vont attaquer les chaînes de polymères en les cassant. De plus, les chaînes les plus longues seront cassées préférentiellement, ce qui implique une diminution des masses moléculaires, cette diminution des masses moléculaires s'accompagnant d'une diminution de la distribution des masses moléculaires ($\overline{M}w/\overline{M}n$).

On peut également faire fondre une poudre d'homopolymère ou de copolymère de propylène, ou d'une composition de polymères comprenant un tel homo- ou copolymère de propylène et y incorporer un peroxyde (reprise de synthèse) en vue d'une extrusion suivie par une granulation.

L'inconvénient de ce procédé réside dans le fait que ces produits ont des propriétés mécaniques : rigidité et choc, plus faibles qu'un produit obtenu directement après polymérisation, extrusion et granulation ou qu'une poudre que l'on a à nouveau soumis à une extrusion et à une granulation.

Des documents illustrant l'état antérieur de la technique sont WO-A-96/12753; EP-A-570 812; US-A-5 932 660; JP-A-07/138 320 ; US-A-5 530 073 ; WO-A-96/06872 ; US-A-5 705 568 ; US-A-3 862 265 ; US-A-5 945 492 ; CA-A-2 258 305 ; US-A-4 900 781 ; DE-A-1 694 563 ; US-A-4 672 088 ; et EP-A-0 853 090.

Cherchant à résoudre ce problème, la Société déposante a découvert de façon surprenante qu'en incorporant, à la place des peroxydes de l'état antérieur de la technique ou en plus de ceux-ci, des radicaux libres stables dans les résines que l'on veut modifier, placées dans un état visqueux (en zone fondue d'une extrudeuse ou en milieu solvant), on obtient les résines recherchées, ayant donc un plus fort indice de fluidité et de meilleures propriétés mécaniques, avec les avantages complémentaires suivants :

- l'incorporation des radicaux stables, lesquels sont toujours présents après l'extrusion, apporte une meilleure stabilité thermique aux produits obtenus, améliore la résistance de ces derniers aux UV et diminue leur tendance à dépolymériser ; et
- dans le cas où l'on a également incorporé un peroxyde à la résine, cette dernière a une viscosité plus stable dans le temps, car comportant un réservoir de contre-radicaux réactivables par voie thermique. En effet, une résine de type polypropylène dégradée par un peroxyde peut contenir des restes de peroxyde. La présence de ce peroxyde risque de modifier la viscosité de la résine lorsque celle-ci est transformée (à chaud), le peroxyde rejouant, lors de cette transformation, son rôle de dégradation de la résine pour en diminuer la viscosité. Or, lors du stockage, le peroxyde a tendance à migrer et donc à quitter la résine, et, selon la durée de stockage, la résine peut donc avoir un comportement différent et montrer une viscosité différente lors ou après transformation, selon qu'il restait peu ou beaucoup de peroxyde. Cependant, la résine contient, après le procédé de la présente invention, un réservoir de radicaux libres stables, lesquels ont tendance à neutraliser le peroxyde dès que celui-ci se décompose, minimisant ainsi ses effets de dégradation, qu'il soit en forte ou faible concentration. Ainsi, la durée du stockage n'a plus autant d'effet sur la viscosité de la résine transformée.

La présente invention concerne un procédé de fabrication d'une résine à rhéologie contrôlée d'un homo- ou copolymère du propylène ou d'une composition comprenant un homo- ou copolymère du propylène, caractérisé par le fait que l'on incorpore à ladite résine à l'état visqueux au moins un radical libre stable dans une quantité capable d'augmenter l'indice de fluidité de ladite résine, puis que l'on forme un produit solide ayant un indice de fluidité augmenté. Cette phrase signifie que le radical libre stable n'empêche pas l'indice de fluidité de la résine d'augmenter au cours du procédé de l'invention, même si en lui-même, le radical libre stable peut parfois tendre à limiter l'ampleur de cette augmentation. Dans tous les cas, le procédé selon l'invention mène à une résine à l'indice de fluidité augmenté par rapport à la résine de départ, sous l'effet de coupures de chaînes de polymère, lesdites coupures prenant place sous l'effet de la chaleur et/ou sous l'effet d'amorceurs de polymérisation. Par amorceur de polymérisation, on entend un initiateur de radicaux libres capables d'entraîner la coupure des chaînes de polymère (aucune polymérisation ne prend place au cours du procédé de l'invention).

La présente invention a donc pour objet un procédé de fabrication d'une résine à rhéologie contrôlée d'un homo- ou copolymère du propylène ou d'une composition comprenant un homo- ou copolymère du propylène en l'absence de monomère fonctionnel, ledit procédé entraînant une augmentation de l'indice de fluidité de la résine par

coupure de chaînes, caractérisé par le fait que l'on incorpore à ladite résine à l'état visqueux au moins un radical libre stable, puis que l'on forme un produit solide ayant un indice de fluidité augmenté.

On choisit notamment le ou les radicaux libres stables parmi les radicaux nitroxyde, c'est-à-dire contenant le groupement $=N-O^{\bullet}$, en particulier parmi ceux des formules (Ia), (Ib) ou (Ic) :

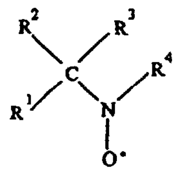

(Ia)

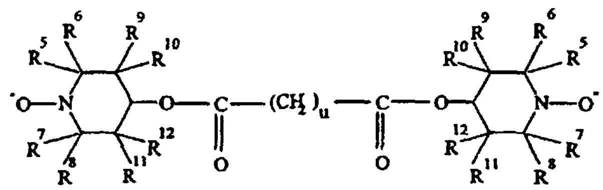

(Ib)

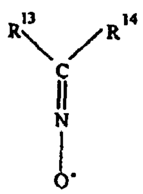

(Ic)

dans lesquelles :

- $R^1$ à $R^3$, $R^5$ à $R^8$ et $R^{13}$ et $R^{14}$ représentent chacun indépendamment :

  (a) un atome d'hydrogène ;
  (b) un atome d'halogène, tel que le chlore, le brome ou l'iode ;
  (c) un groupement hydrocarboné, saturé ou insaturé, linéaire, ramifié ou mono- ou polycyclique, et pouvant être substitué par au moins un halogène ;
  (d) un groupement ester $-COOR^{15}$ ou un groupement alcoxyle $-OR^{16}$, $R^{15}$ et $R^{16}$ représentant un groupement hydrocarboné tel que défini au point (c) ci-dessus ;
  (e) un groupement de formule

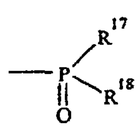

,

  où $R^{17}$ et $R^{18}$ représentent chacun indépendamment un radical alkyle linéaire, ramifié ou cyclique, perfluoroalkyle, aryle, aralkyle, alkaryle, alcoxyle, aryloxyle, aralkylaxyle, alkaryloxyle, ces radicaux pouvant comprendre de 1 à 20 atomes de carbone ; ou halogène tel que chlore, brome, fluor ou iode ;
  (f) une chaîne de polymère pouvant, par exemple, être une chaîne de poly(méthacrylate d'alkyle) ou de poly (acrylate d'alkyle), comme le poly(méthacrylate de méthyle), de polydiène comme le polybutadiène, de polyoléfine comme le polyéthylène ou le polybutadiène, mais étant, de préférence, une chaîne de polystyrène ;

- $R^4$ a les significations définies aux points (a), (b), (c), (d) et (f) ci-dessus, et dans le cas où il est relié à l'atome d'azote par un atome de carbone, ce dernier peut porter au moins un groupement tel que défini au point (e) ci-dessus ;
- $R^9$ à $R^{12}$, identiques ou différents, ont les significations définies aux points (a) à (f) ci-dessus et peuvent en outre représenter un groupement hydroxyde ou un groupement acide, tel que -COOH, $-PO(OH)_2$ ou $-SO_3H$;
- $R^3$ et $R^4$ pouvant être reliés entre eux, et - dans le cas où $R^4$ représente un reste $-CR'^1R'^2R'^3$ ($R'^1$ à $R'^3$ ayant indifféremment les significations de $R^1$ à $R^3$) $R^3$ pouvant être relié à $R'^3$ - pour former un hétérocycle comportant l'atome d'azote de

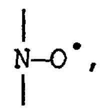

ledit hétérocycle pouvant être saturé ou insaturé, pouvant comporter dans le cycle au moins un autre hétéroatome et/ou au moins un groupement

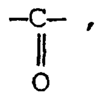

et pouvant également comporter un cycle accolé, saturé ou insaturé ;
- deux parmi $R^1$ à $R^3$, $R^5$ et $R^6$, $R^7$ et $R^8$, $R^9$ et $R^{10}$, $R^{11}$ et $R^{12}$, $R^6$ et $R^9$, $R^8$ et $R^{11}$, $R^{13}$ et $R^{14}$ et - dans le cas où $R^4$ représente un reste $-CR'^1R'^2R'^3$, $R^3$ et $R'^3$ - pouvant indépendamment être reliés entre eux pour former, avec l'atome de carbone qui les porte, un cycle ou un hétérocycle saturé ou insaturé ;
- u est un entier non nul, par exemple de 1 à 18.

A titre d'exemples des groupements hydrocarbonés tels que définis au point (c) ci-dessus, on peut citer ceux ayant de 1 à 20 atomes de carbone, comme les radicaux alkyle linéaires, ramifiés ou cycliques, et les radicaux aryle tels que phényle ou naphtyle, et les radicaux comprenant au moins un cycle aromatique qui peut être substitué par exemple par un radical alkyle en $C_1$-$C_4$, comme les radicaux aralkyle, tels que benzyle.

On peut mentionner en particulier les radicaux nitroxyde de formule (Ia) dans lesquels l'un parmi $R^1$ à $R^3$ présente une masse molaire supérieure à 15, de préférence supérieure à 30, en particulier comprise entre 40 et 450.

Une famille particulière des radicaux nitroxyde qui peuvent être envisagés conformément à la présente invention est celle des radicaux nitroxyde de formule (Ia) dans laquelle $R^3$ et $R^4$ (ou $R^3$ et $R'^3$) sont reliés entre eux et qui sont choisis notamment parmi :

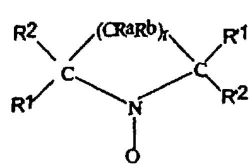

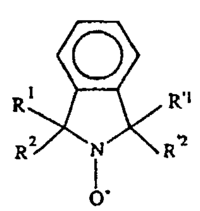

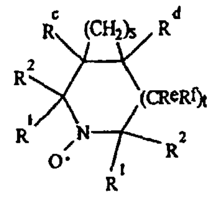

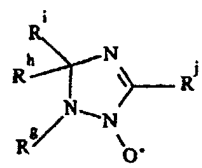

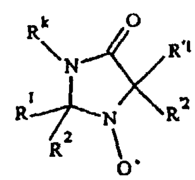

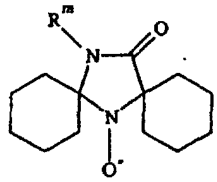

où :

- $R^a$ à $R^k$ et $R^m$ ont indépendamment les significations données pour $R^9$ à $R^{12}$, les $R^a$ et $R^b$ et $R^e$ et $R^f$ pouvant être identiques ou différents lorsqu'ils sont portés par des atomes de carbone différents ;
- r vaut 2 ou 3 ou 4 ;
- s est un entier non nul, en particulier de 1 à 10 ;
- t vaut 0, 1 ou 2.

Par ailleurs, à titre d'exemples particuliers de radicaux nitroxyde, on peut indiquer les suivants :

- le 2,2,5,5 tétraméthyl-1-pyrrolidinyloxy (généralement commercialisé sous la marque PROXYL) :

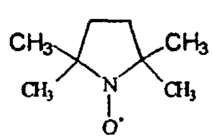 ;

- le 3-carboxy-2,2,5,5-tétraméthyl-pyrrolidinyloxy (communément appelé 3-carboxy PROXYL) ;
- le 2,2,6,6-tétraméthyl-1-pipéridinyloxy (communément appelé TEMPO) :

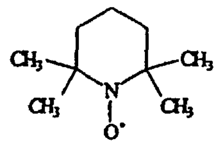 ;

- le 4-hydroxy-2,2,6,6-tétraméthyl-1-pipéridinyloxy (communément appelé le 4-hydroxy-TEMPO)
- le 4-méthoxy-2,2,6,6-tétraméthyl-1-pipéridinyloxy (communément appelé le 4-méthoxy-TEMPO) ;
- le 4-oxo-2,2,6,6-tétraméthyl-1-pipéridinyloxy (communément appelé le 4-oxo-TEMPO) ;
- le bis-(1-oxyl-2,2,6,6-tétraméthylpipéridine-4-yl)sébacate, représenté par la formule :

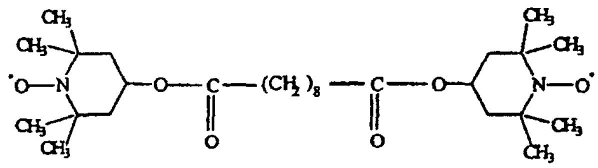

(commercialisé sous la marque "CXA 5415" par la Société "CIBA SPECIALTY CHEMICAL") ;

- le 2,2,6,6-tétraméthyl-4-hydroxypipéridine-1-oxyl)monophosphonate :

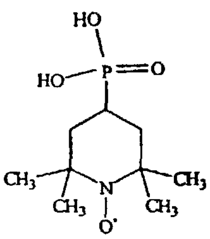

- le N-tertiobutyl-1-diéthylphosphono-2,2-diméthyl propyl nitroxyde (DEPN) :

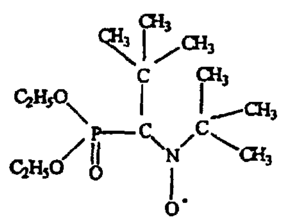

- le N-tertiobutyl-1-dibenzylphosphono-2,2-diméthyl propyl nitroxyde ;
- le N-tertiobutyl-1-di(2,2,2-trifluoroéthyl)phosphono-2,2-diméthyl propyl nitroxyde ;
- le N-tertiobutyl-[(1-diéthylphosphono)-2-méthylpropyl]nitroxyde ;
- le N-(1-méthyléthyl)-1-cyclohexyl-1-(diéthylphosphono)nitroxyde :

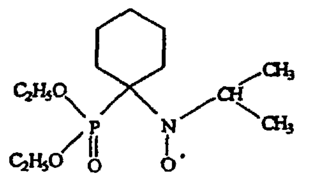 ;

- le N-(1-phénylbenzyl)-[(1-diéthylphosphono)-1-méthyl éthyl] nitroxyde :

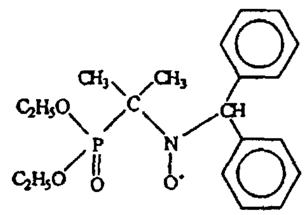

- le N-phényl-1-diéthylphosphono-2,2-diméthyl propyl nitroxyde ;
- le N-phényl-1-diéthylphosphono-1-méthyl éthyl nitroxyde ;
- le N-(1-phényl 2-méthyl propyl)-1-diéthylphosphono-1-méthyl éthyl nitroxyde ;
- le N-tertiobutyl-1-phényl-2-méthyl propyl nitroxyde :

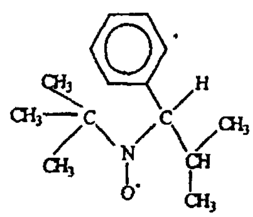 ;

et

- le N-tertiobutyl-1-(2-naphtyl)-2-méthyl propyl nitroxyde.

On peut également citer, à titre de radical stable non nitroxyde, le 2,4,6-tri-tert.-butyl phénoxy.

On peut incorporer à la résine à l'état visqueux de 1 ppm à 5 % en poids, en particulier de 10 ppm à 5% en poids, d'au moins un radical libre stable par rapport à ladite résine.

Par ailleurs, conformément à une caractéristique particulière de la présente invention, on incorpore à la résine à l'état visqueux au moins un amorceur. de polymérisation radicalaire dans une quantité suffisante pour obtenir, après réaction, la résine avec la viscosité souhaitée. La valeur de cette viscosité est exprimée par le MFI, en g/10 min.

Les amorceurs de polymérisation radicalaire que l'on peut utiliser sont tous ceux connus de l'homme du métier. On peut citer les peroxydes de diacyle, les peroxyesters, les peroxycétals, les peroxydes de dialkyle, les hydroperoxydes, les peroxydicarbonates, les composés azoïques et les peroxyphtalides.

En particulier, on peut citer, à titre d'exemples, les amorceurs de polymérisation radicalaire parmi :

. le peroxyde de benzoyle ;
. le peroxyde de lauroyle ;
. le peroxyde de décanoyle ;
. le peroxyde de 3,5,5-triméthylhexanoyle ;
. le peroxyde d'acétyle et de cyclohexyl sulfonyle ;
. le peroxybenzoate de tert.-butyle ;
. le peroxyacétate de tert.-butyle ;
. le peroxy-3,5,5-triméthylhexanoate de tert.-butyle ;
. le peroxy-3,5,5-triméthylhexanoate de tert.-amyle ;
. le 2,5-diméthyl-2,5-di(benzoylperoxy)hexane ;

- le OO-tert.-butyl-O-isopropyl-monoperoxy carbonate ;
- le OO-tert.-butyl-O-(2-éthylhexyl)monoperoxy carbonate ;
- le OO-tert.-amyl-O-(2-éthylhexyl)monoperoxy carbonate ;
- le peroxyisobutyrate de tert.-butyle ;
- le peroxy-2-éthylhexanoate de tert.-butyle ;
- le peroxy-2-éthylhexanoate de tert.-amyle ;
- le 2,5-diméthyl-2,5-di(2-éthylhexanoyl peroxy)hexane ;
- le peroxypivalate de tert.-butyle ;
- le peroxypivalate de tert.-amyle ;
- le peroxynéodécanoate de tert.-butyle ;
- le peroxyisononanoate de tert.-butyle ;
- le peroxynéodécanoate de tert.-amyle ;
- le peroxynéodécanoate d'a-cumyle ;
- le 3-hydroxy-1,1-diméthylbutyl-peroxynéodécanoate ;
- le peroxymaléate de tert.-butyle ;

- le 3,3-di(tert.-butylperoxy)butyrate d'éthyle ;
- le 3,3-di(tert.-amylperoxy)butyrate d'éthyle ;
- le 4,4-di(tert.-butylperoxy)valérate de n-butyle ;
- le 2,2-di(tert.-butylperoxy)butane ;
- le 1,1-di(tert.-butylperoxy)cyclohexane ;
- le 1,1-di(tert.-butylperoxy)cyclohexane ;

- le 1,1-di(tert.-butylperoxy)3,3,5-triméthylcyclohexane ;
- le 1,1-di(tert.-amylperoxy)cyclohexane;
- le 2,2-bis-(4,4-ditert.-butyl peroxy cyclohexyl) propane) ;
- le 2,5-diméthyl-2,5-di(tert.-butylperoxy)hexyne-(3);
- le peroxyde de di-tert.-butyle ;
- le peroxyde de di-tert.-amyle ;
- le peroxyde de tert.-butyle et de cumyle ;
- le 1,3-di(tert.-butylperoxy-isopropyl)-benzène ;
- le 2,5-diméthyl-2,5-di(tert.-butylperoxy)hexane ;
- le 1,1,4,4,7,7-hexaméthylcyclo-4,7-diperoxynonane ;
- le 3,3,6,6,9,9-hexaméthylcyclo-1,2,4,5-tétraoxanonane ;

- l'hydroperoxyde de tert.-butyle ;
- l'hydroperoxyde de tert.-amyle ;
- l'hydroperoxyde de cumyle ;
- le 2,5 diméthyl-2,5-di(hydroperoxy)hexane
- le mono hydroperoxyde de diisopropylbenzène ;
- l'hydroperoxyde de paramenthane ;

- le peroxydicarbonate de di-(2-éthylhexyle) ;
- le peroxydicarbonate de dicyclohexyle ;

- le 2,2'-azo-di(2-acétoxypropane) ;
- le 2,2'-azobis(isobutyronitrile) ;
- le 2,2'-azobis(2,4-diméthylvaléronitrile) ;
- le 2,2'-azobis(cyclohexanenitrile) ;
- le 2,2'-azobis-(2-méthylbutyronitrile) et
- le 2,2'-azobis(2,4-diméthyl-4-méthoxyvaléronitrile); et

- le 3-phényl-3-tert.-butyl-peroxyphtalide.

On peut incorporer le ou les amorceurs de polymérisation radicalaire dans une quantité allant jusqu'à 5 % en poids, en particulier à raison de 50 ppm à 0,5 % en poids, par rapport au poids de la résine.

Par ailleurs, on peut utiliser un rapport $SFR{\bullet}F_{SFR}/AMO{\bullet}F_{AMO}$ de 0,0001 à 2,5, en particulier de 0,005 à 2,5, avec :

- SFR représentant le nombre de mole de radical libre stable dans le milieu ;
- $F_{SFR}$ représentant la fonctionnalité du radical libre stable, c'est-à-dire le nombre de sites sur la même molécule de radical libre stable présentant l'état de radical libre stable ;
- AMO représentant le nombre de mole d'amorceur dans le milieu ;
- $F_{AMO}$ représentant la fonctionnalité de l'amorceur, c'est-à-dire le nombre de sites présentant l'état de radical libre que chaque molécule d'amorceur est capable de générer.

La résine de départ est notamment un homopolymère du propylène. On peut mentionner tous les homopolymères possibles du propylène : polypropylène isotactique, polypropylène atactique, polypropylène syndiotactique.
La résine de départ peut également être un copolymère du propylène, statistique ou à blocs, le ou les comonomères représentant jusqu'à 10% en poids dudit copolymère. Le ou les comonomères sont choisis notamment parmi les alkylènes tels que l'éthylène et le butylène, les diènes, et les monomères vinylaromatiques tels que le styrène. On peut citer, à titre d'exemples, les copolymères alkylène/propylène, tels que les copolymères statistiques et à blocs éthylène/propylène, et les terpolymères tels qu' alkylène/propylène/butylène, comme les terpolymères éthylène/propylène/butylène ; les copolymères propylène/diène monomère ; et les copolymères styrènepropylène.
On peut également citer, comme résine de départ, un homopolymère du propylène ou un copolymère du propylène tel que défini ci-dessus en mélange avec au moins un autre polymère choisi notamment parmi le polyéthylène, le polystyrène, le poly(méthacrylate de méthyle), le polybutadiène, un EPDM (copolymère éthylène-propylène-diène monomère), un copolymère éthylène-acrylate, un copolymère éthylène - acide acrylique, un terpolymère éthylène - acrylate - anhydride maléique.
Dans un tel mélange, le ou les autres polymères représentent généralement au plus 50% en poids du mélange.
Il est par ailleurs précisé que la résine de base ne contient pas ou peu (moins de 200 ppm) de monomère fonctionnel tel que l'anhydride maléique et d'autres monomères fonctionnels comportant les fonctions acides carboxyliques et leurs dérivés, les chlorures d'acides, les isocyanates, les oxazolines, les époxydes, les amines ou les hydroxydes, dont des exemples sont donnés dans US-A-5 705 568.
Conformément à un premier mode de réalisation du procédé selon l'invention, on introduit le ou les radicaux libres stables, et, le cas échéant, le ou les amorceurs, dans au moins une zone fondue de l'extrudeuse située à la sortie du réacteur de synthèse de l'homopolymère ou du copolymère de propylène, ou dans au moins une zone fondue de l'extrudeuse utilisée en reprise de synthèse de l'homopolymère ou du copolymère du propylène, ou encore dans une autre extrudeuse qui ne se trouve pas nécessairement en sortie du réacteur de polymérisation, auquel cas on alimente dans l'extrudeuse tous les produits que l'on souhaite incorporer dans la formulation.
On réalise alors la mise en contact de la résine à l'état visqueux et du radical stable ou des radicaux stables, et, le cas échéant, du ou des amorceurs de polymérisation radicalaire, et, le cas échéant du ou des autres polymères, généralement à une température de 100°C à 350°C, en particulier à une température de 160°C à 250°C, et généralement pendant une durée de 10 secondes à 5 heures, de préférence pendant une durée de 10 secondes à 1 heure, et, en particulier, de 15 secondes à 1 minute.
Avantageusement, on peut introduire le ou les radicaux libres stables et, le cas échéant, le ou les amorceurs, en solution dans un solvant, tel que le trichlorobenzène, la concentration du ou des radicaux libres stables étant de 1 à 100% en poids (100% correspondant à l'absence de solvant). On introduit par exemple cette solution du ou des radicaux stables et, le cas échéant, du ou des amorceurs, à un débit d'injection de 0,01-5% en poids du débit total. Ce solvant, qui apporte de la précision sur le débit, est éliminé pendant l'extrusion dans les puits de dégazage.
On peut également incorporer le ou les radicaux libres stables et, le cas échéant le ou les amorceurs, via un mélange-maître, tel qu'un mélange sur poudre de polypropylène ou de polyéthylène.
La résine modifiée conformément au procédé de la présente invention sort de l'extrudeuse sous la forme d'un jonc, lequel est ensuite dirigé, de façon connue, vers un dispositif de granulation.
Conformément à un second mode de réalisation du procédé selon l'invention, on introduit le ou les radicaux stables et, le cas échéant, le ou les amorceurs de polymérisation, dans la résine de départ placée en milieu solvant, à une température de 80°C à 350°C. Le solvant est notamment choisi parmi les hydrocarbures aliphatiques, cycloaliphatiques et aromatiques, le cas échéant halogénés (chlorés).
La résine, le ou les radicaux libres stables et, le cas échéant, le ou les amorceurs en présence de solvant sont introduits dans un réacteur de type réacteur de polymérisation, et l'ensemble est porté à la température désirée. Cette température est choisie en fonction des composants introduits (radicaux libres stables et amorceurs). Le temps de réaction est déterminé également en fonction de l'amorceur . on choisit ce temps de réaction entre 3 et 10 demi-vies de l'amorceur à la température de réaction. Après la réaction, le mélange réactionnel est purifié, par exemple par introduction de ce dernier par l'intermédiaire d'une pompe à engrenage dans un dévolatiliseur pour éliminer le solvant. Le polymère fondu est ensuite introduit également par l'intermédiaire d'une pompe à engrenage dans une filière, suivie d'un granulateur, pour obtenir les granulés de la résine finale.
En ce qui concerne les solvants, on peut utiliser tous les solvants des polyoléfines.

Par ailleurs, d'une manière générale, un amorceur est de préférence présent pour une température inférieure à 200°C. Il peut ne pas y avoir d'amorceur au-dessus de 200°C.

En l'absence d'amorceur, la dégradation se fait par coupure de chaîne par un mécanisme radicalaire sous le seul effet de la chaleur (mécanisme dit de "bêta-scission".

Les Exemples suivants illustrent la présente 5 invention, sans toutefois en limiter la portée. Dans ces Exemples :

- les pourcentages sont en poids sauf indication contraire ;
- les valeurs des indices de fluidité IF (Melt Index) ont été mesurées à 230°C, sous 2,16 kg, conformément à la norme ISO 1133:91 ;
- les valeurs des masses moléculaires moyennes en nombre ($\overline{Mn}$) et des masses moléculaires moyennes en poids ($\overline{Mw}$) ont été mesurées par GPC ;
- les valeurs du module ont été mesurées sur des éprouvettes de 80 x 10 x 4, conformément à la norme ISO 178:93 ;
- les essais de choc Charpy entaillé ont été réalisés à 23°C, sur des éprouvettes de 80 x 10 x 4, conformément à la norme ISO 179-1eA ;
- les essais de choc grande vitesse ou "FWI" ont été réalisés sur plaque 100 x 100 x 2 avec une vitesse de l'impacteur à 4,3 m/sec.

Par ailleurs, les abréviations suivantes ont été 5 utilisées :

I - <u>POLYMÈRE DU PROPYLÈNE</u>

. HomoPP: homopolymère du propylène présentant les caractéristiques suivantes :

  - indice de fluidité (2,16 kg, 230°C) : 3 g/10 min.
  - masse volumique : 0,905 g/$cm^3$
  - point de fusion : 163°C
  - $\overline{Mn}$ = 52 200
  - $\overline{Mw}$ = 296 200
  - Ip (indice de polymolécularité $\overline{Mw}/\overline{Mn}$) = 5,7
  - Module : 1256 MPa
  - Choc Charpy entaillé : 3,1 kJ/$m^2$.

. PPcopo: copolymère à blocs propylène/éthylène, présentant les caractéristiques suivantes .

  - indice de fluidité (2,16 kg, 230°C) : 1 g/10 min.
  - masse volumique : 0,902 g/$cm^3$
  - point de fusion : 163°C
  - Module en flexion : 1200 MPa
  - Choc grande vitesse : 80 kJ/$m^2$.

II - <u>RADICAL LIBRE</u>

. TEMPO: 2,2,6,6-tétraméthyl-1 pipéridinyloxy ($C_9H_{18}NO$), de masse moléculaire 156,25 et de point de fusion 38°C.

. TEMPOL: (4-hydroxy-TEMPO)=4-hydroxy-2,2,6,6-tétraméthyl-1-pipéridinyloxy

III - <u>AMORCEUR</u>

. DHBP: 2,5-bis-(tert.-butylperoxy)-2,5-diméthylhexane, de formule développée :

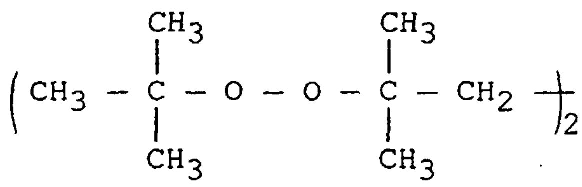

de masse moléculaire 290,4, sous forme liquide, de pureté égale à 92 %.

EXEMPLE 1 (RÉFÉRENCE): Passaqe en extrudeuse de l'homoPP seul

On utilise une extrudeuse LEISTRITZ n° 30-34 à deux vis corotatives, que l'on fait fonctionner dans les conditions suivantes :

- débit total : 12 kg/h ;
- vitesse de vis : 75 tours/minute ;
- profil de température :

| Zone 1 | Zone 2 | Zone 3 | Zone 9 | Zone 5 | Zone 6 | Zone 7 | Zone 8 | Zone 9 |
|---|---|---|---|---|---|---|---|---|
| 200°C | 180°C | 200°C | 210°C | 220°C | 220°C | 210°C | 200°C | 180°C |

Le dégazage s'effectue en zone 7.

Les granulés d'homoPP sont introduits par un doseur pondéral K-TRON T20 dans l'extrudeuse. La mise en conditions de la machine s'effectue pendant 20 minutes sans incident au débit total de 12 kg/h, et ensuite l'échantillon d'environ 10 kg est recueilli et conditionné en sac étanche.

Les caractéristiques et les propriétés mécaniques de l'homoPP passé en extrudeuse sont indiquées dans le Tableau 1 ci-après.

EXEMPLE 2 (COMPARATIF): Obtention d'un homoPP dégradé par passage en extrudeuse de l'homoPP de base avec incorporation de DHBP

On procède comme à l'Exemple 1 excepté que l'on injecte dans la zone 2 de l'extrudeuse, grâce à une pompe DOSAPRO double corps, une solution de DHBP dans le trichlorobenzène, la teneur en DHBP étant ajustée pour avoir un débit d'injection de la solution de 1 % du débit total. La quantité de DHBP par rapport à l'homoPP de base est indiquée dans le Tableau 1.

Les caractéristiques et les propriétés mécaniques de l'homo PP ainsi dégradé sont également indiquées dans le Tableau 1 ci-après.

EXEMPLES 3 et 4 (INVENTION): Obtention d'un homoPP dégradé de qualité améliorée par passage, en extrudeuse de l'homoPP de base avec incorporation de DHBP + TEMPO

On procède comme à l'Exemple 2, excepté que l'on injecte au débit indiqué, une solution dans le trichlorobenzène de DHBP + TEMPO, les quantités de DHBP et de TEMPO par rapport à l'homoPP étant indiquées également dans le Tableau 1.

Les résultats figurent aussi dans le Tableau 1.

## TABLEAU 1

| Exemple | DHBP réel (ppm) * | TEMPO réel (ppm) | Rapport molaire TEMPO/DHBP | Trichloro-benzène (%) | IF (g/10min.) | $\overline{Mn}$ | $\overline{Mw}$ | Ip | Module (MPa) | Choc Charpy entaillé Energie à 23°C (kJ/m$^2$) |
|---|---|---|---|---|---|---|---|---|---|---|
| HomoPP de base | | | | | 3,6 | 52 200 | 296 200 | 5,7 | 1256 | 3,1 |
| 1 (Référence) | 0 | 0 | 0 | | 3,9 | 60 890 | 313 000 | 5,1 | 1253 | 3,1 |
| 2 (Comparatif) | 512 | 0 | 0 | 0,95 | 34,2 | 44 540 | 174 100 | 3,9 | 1166 | 2,2 |
| 3 (Invention) | 513 | 28 | 0,1 | 0,5 | 26,4 | 39 710 | 150 600 | 3,8 | 1165 | 2,7 |
| 4 (Invention) | 2050 | 1013 | 1 | 0,78 | 24,5 | 40 900 | 156 200 | 3,8 | 1166 | 2,8 |

* On a tenu compte du fait que le DHBP est pur à 92 %

On constate que l'incorporation du radical libre stable a permis d'obtenir un homoPP ayant un indice de fluidité dans la plage recherchée, avec une meilleure propriété choc tout en conservant la même rigidité.

EXEMPLE 5 (RÉFÉRENCE): Passage en extrudeuse de l'homoPP seul

On procède comme à l'Exemple 1, excepté que le profil de température de l'extrudeuse est modifié comme suit.

| Zone 1 | Zone 2 | Zone 3 | Zone 4 | Zone 5 | Zone 6 | Zone 7 | Zone 8 | Zone 9 |
|---|---|---|---|---|---|---|---|---|
| 200°C | 180°C | 200°C | 230°C | 250°C | 250°C | 240°C | 200°C | 180°C |

EXEMPLE 6 (COMPARATIF): Obtention d'un homoPP dégradé par passage en extrudeuse de l'homoPP de base avec incorporation de DHBP

On procède comme à l'Exemple 5, excepté que l'on injecte dans la zone 2 de l'extrudeuse, grâce à une pompe DOSAPRO double corps, une solution de DHBP dans le trichlorobenzène, la teneur en DHBP étant ajustée pour avoir un débit d'injection de la solution de 1 % du débit total. La qualité de DHBP par rapport à l'homoPP de base est indiquée dans le Tableau 2.

Les caractéristiques et les propriétés mécaniques de l'homo PP ainsi dégradé sont également indiquées dans le Tableau 2 ci-après.

EXEMPLES 7 à 9 (INVENTION): Obtention d'un homoPP déctradé de qualité améliorée par passage en extrudeuse de l'homoPP de base avec incorporation de DHBP + TEMPO

On procède comme à l'Exemple 6, excepté que l'on injecte, au débit indiqué, une solution dans le trichlorobenzène, de DHBP + TEMPO, les quantités de DHBP + TEMPO par rapport à l'homoPP de base étant indiquées également dans le Tableau 2.

Les résultats figurent aussi dans le Tableau 2.

TABLEAU 2

| Exemple | DHBP réel (ppm)* | TEMPO réel (ppm) | Rapport molaire TEMPO/DHBP | Trichloro-benzène (%) | IF (g/10 min.) | $\overline{Mn}$ | $\overline{Mw}$ | Ip | Module (MPa) | Choc Charpy entaillé Energie à 23°C (kJ/m$^2$) |
|---|---|---|---|---|---|---|---|---|---|---|
| HomoPP de base | | | | | 3,6 | 52 200 | 296 200 | 5,7 | 1256 | 3,1 |
| 5 | 0 | 0 | 0 | | 4,3 | 52 590 | 274 400 | 5,2 | 1235 | 3,2 |
| 6 | 513 | 0 | 0 | 0,95 | 38,9 | 41 430 | 144 500 | 3,5 | 1146 | 2,4 |
| 7 | 500 | 27 | 0,1 | 0,95 | 41,1 | 46 180 | 165 900 | 3,6 | 1183 | 2,3 |
| 8 | 500 | 135 | 0,5 | 0,94 | 35,4 | 44 920 | 174 100 | 3,9 | 1211 | 2,2 |
| 9 | 2050 | 1103 | 1 | 0,95 | 46,1 | 41 880 | 139 500 | 3,3 | 1202 | 2,2 |

* On a tenu compte du fait que le DHBP est pur à 92 %.

On constate que l'incorporation du radical libre stable a permis d'obtenir un homoPP ayant un indice de fluidité dans la plage recherchée avec une meilleure rigidité tout en conservant la même propriété choc.

EXEMPLE 10 (de Référence):

Passage en extrudeuse du PPCopo seul

On procède comme à l'Exemple 1 en remplaçant l'HomoPP par le PPCopo.

Les caractéristiques et les propriétés mécaniques du PPCopo passé en extrudeuse sont indiquées dans le Tableau 3 ci-après.

EXEMPLES 11 à 13 (comparatifs):

Obtention d'un PPCopo dégradé par passage en extrudeuse du PPCopo de base avec incorporation de DHBP

On procède comme à l'Exemple 2, excepté que le DHBP est alimenté par mélange-maître sur poudre PE.

Les caractéristiques et les propriétés mécaniques du PPCopo ainsi dégradé sont également indiquées dans le Tableau 3.

EXEMPLES 14 à 19 :

Obtention d'un PPCopo dégradé de qualité améliorée par passage en extrudeuse du PPCopo de base avec incorporation de DHBP + TEMPOL

On procède comme pour les Exemples 11 à 13, excepté que l'on injecte à la fois du DHBP et du TEMPOL.

Les résultats figurent dans le Tableau 3.

TABLEAU 3

| Exemple | DHBP (ppm) | TEMPO (ppm) | Poudre PE (%)* | Rapport molaire Tempo/DHBP | IF (g/10 min) | Module (MPa) | Choc à grande vitesse à 23°C | Choc à grande vitesse à -20°C |
|---|---|---|---|---|---|---|---|---|
| 10 (référence | 0 | 0 | 0 | | 1 | 1200 | 80 | 70 |
| 11 (comparatif) | 950 | 0 | 4 | 0 | 23 | 925 | 39 | 22 |
| 12 (comparatif) | 1250 | 0 | 4 | 0 | 36 | 900 | 38 | 22 |
| 13 (comparatif) | 1600 | 0 | 4 | 0 | 57 | 870 | 37 | 22 |
| 14 | 1500 | 445 | 4 | 0,5 | 27 | 860 | 42 | 29 |
| 15 | 1950 | 578 | 4 | 0,5 | 43 | 875 | 41,5 | 26,5 |
| 16 | 2250 | 667 | 4 | 0,5 | 62 | 875 | 38 | 26 |
| 17 | 2000 | 1186 | 4 | 1 | 25 | 890 | 40 | 25 |
| 18 | 3000 | 1780 | 4 | 1 | 36 | 900 | 39 | 26,5 |
| 19 | 4600 | 2730 | 4 | 1 | 65 | 885 | 39 | 24 |

* pourcentage indiqué par rapport à la base de PP

On constate que l'incorporation du radical libre stable a permis d'obtenir un PPCopo avec des résultats chocs supérieurs.

EXEMPLE D'ESSAI 20 :

Tenue aux UV d'homoPP dégradés peroxydiguement en extrudeuse en présence de TEMPO

Les irradiations ont été effectuées sur des films réalisés à la presse chauffante. Les essais de vieillissement aux UV ont été conduits par exposition en enceinte SEPAP 12-24, selon les conditions décrites dans la NF T 54-190 :

- lampes à mercure moyenne pression de puissance unitaire 400 W, dont l'enveloppe filtre les UV en-dessous de 290 nm ;
- exposition continue ;
- pas d'aspersion des échantillons ;
- humidité relative non contrôlée ;
- température mesurée et régulée sur film par une sonde de contact : 60°C ± 2°C ;
- de l'étalonnage de l'enceinte par un film PEBD faiblement stabilisé pour lequel l'état d'oxydation mesuré à 1715$cm^{-1}$ est égal à 0,12 ± 0,02 après 100 heures d'irradiation.

L'état d'oxydation des différents échantillons est suivi par IRTF, en transmission dans la zone des carbonyles. A partir de ces spectres, le dosage du taux de carbonyles synonymes de produits de photooxydation est donc possible. Il permet d'établir la cinétique de photooxydation des différents produits. La mesure est effectuée à 1713$cm^{-1}$ (absorbance due aux carbonyles des fonctions acides synonymes de coupure de chaîne). La fréquence des mesures est fonction de l'état d'oxydation du contrôle précédent.

Le Tableau 4 ci-après illustre les résultats obtenus.

Tableau 4

| HomoPP de l'Ex. | DHBP réel (ppm) | TEMPO réel (ppm) | Rapport Molaire TEMPO/DHBP | Profil de tempé-rature: Cf. Ex. | VARIATION DE LA DENSITÉ OPTIQUE À 1713CM⁻¹ EN FONCTION DU TEMPS D'IRRADIATION | | | | | | | | | | | | |
|---|---|---|---|---|---|---|---|---|---|---|---|---|---|---|---|---|---|
| | | | | | TEMPS (HEURES) | | | | | | | | | | | | |
| | | | | | 17 | 34 | 50 | 66 | 70 | 74 | 78 | 95 | 111 | 127 | 135 | 159 | 183 |
| | | | | | 0 | 0,1492 | 0,3316 | 0,4685 | 0,6622 | 0,4508 | arrêt | | | | | | |
| 2 | 512 | 0 | 0 | 1 | 0 | 0,0866 | 0,245 | 0,4285 | 0,7004 | arrêt | - | | | | | | |
| 7 | 500 | 27 | 0,1 | 5 | 0 | 0,1026 | 0,2741 | 0,4418 | 0,6216 | 0,5417 | arrêt | | | | | | |
| 8 | 500 | 135 | 0,5 | 5 | 0 | | | | 0,1743 | | 0,2475 | 0,4326 | arrêt | | | | |
| 4 | 2050 | 1013 | 1 | 1 | 0 | | | | 0,0457 | | 0,0493 | 0,0653 | 0,107 | 0,155 | 0,1845 | 0,2541 | 0,4056 |

## Revendications

1. Procédé de fabrication d'une résine à rhéologie contrôlée d'un homo- ou copolymère du propylène ou d'une composition comprenant un homo- ou copolymère du propylène en l'absence de monomère fonctionnel, ledit procédé entraînant une augmentation de l'indice de fluidité de la résine par coupure de chaînes, **caractérisé par le fait que** l'on incorpore à ladite résine à l'état visqueux au moins un radical libre stable, puis que l'on forme un produit solide ayant un indice de fluidité augmenté.

2. Procédé selon la revendication 1, **caractérisé par le fait que** l'on choisit le ou les radicaux libres stables parmi les radicaux nitroxyle, comportant au moins un groupement =N-O•.

3. Procédé selon la revendication 2, **caractérisé par le fait que** l'on choisit les radicaux nitroxyle parmi ceux des formules (Ia), (Ib) ou (Ic) :

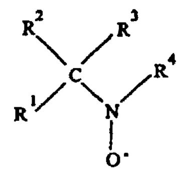

(Ia)

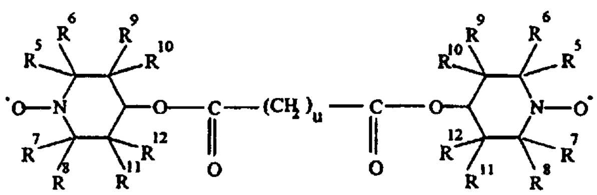

(Ib)

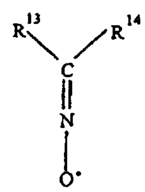

(Ic)

dans lesquelles :

- $R^1$ à $R^3$, $R^5$ à $R^8$ et $R^{13}$ et $R^{14}$ représentent chacun indépendamment :

  (a) un atome d'hydrogène ;
  (b) un atome d'halogène ;
  (c) un groupement hydrocarboné, saturé ou insaturé, linéaire, ramifié ou mono- ou polycyclique, et pouvant être substitué par au moins un halogène ;
  (d) un groupement ester $-COOR^{15}$ ou un groupement alcoxyle $-OR^{16}$, $R^{15}$ et $R^{16}$ représentant un groupement hydrocarboné tel que défini au point (c) ci-dessus ;
  (e) un groupement de formule

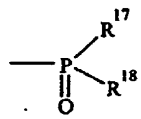,

où $R^{17}$ et $R^{18}$ représentent chacun indépendamment un radical alkyle linéaire, ramifié ou cyclique, perfluoroalkyle, aryle, aralkyle, alkaryle, alcoxyle, aryloxyle, aralkyloxyle, alkaryloxyle, ces radicaux pouvant comprendre de 1 à 20 atomes de carbone ; ou halogène ;
(f) une chaîne de polymère ;

- $R^4$ a les significations définies aux points (a), (b), (c), (d) et (f) ci-dessus, et dans le cas où il est relié à l'atome d'azote par un atome de carbone, ce dernier peut porter au moins un groupement tel que défini au point (e) ci-dessus ;
- $R^9$ à $R^{12}$, identiques ou différents, ont les significations définies aux points (a) à (f) ci-dessus et peuvent en outre représenter un groupement hydroxyde ou un groupement acide, tel que -COOH, -PO(OH)$_2$ ou -SO$_3$H;
- $R^3$ et $R^4$ pouvant être reliés entre eux, et - dans le cas où $R^4$ représente un reste -CR'$^1$R'$^2$R'$^3$ (R'$^1$ à R'$^3$ ayant indifféremment les significations de $R^1$ à $R^3$) $R^3$ pouvant être relié à R'$^3$ - pour former un hétérocycle comportant l'atome d'azote de

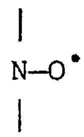,

ledit hétérocycle pouvant être saturé ou insaturé, pouvant comporter dans le cycle au moins un autre hétéroatome et/ou au moins un groupement

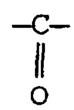,

et pouvant également comporter un cycle accolé, saturé ou insaturé ;
- deux parmi $R^1$ à $R^3$, $R^5$ et $R^6$, $R^7$ et $R^8$, $R^9$ et $R^{10}$, $R^{11}$ et $R^{12}$, $R^6$ et $R^9$, $R^8$ et $R^{11}$, $R^{13}$ et $R^{14}$ et - dans le cas où $R^4$ représente un reste -CR'$^1$R'$^2$R'$^3$, $R^3$ et R'$^3$ - pouvant indépendamment être reliés entre eux pour former, avec l'atome de carbone qui les porte, un cycle ou un hétérocycle saturé ou insaturé ;
- u est un entier non nul.

**4.** Procédé selon la revendication 3, **caractérisé par le fait que** l'on choisit les radicaux nitroxyle de formule (Ia) dans lesquels $R^3$ et $R^4$ (ou $R^3$ et R'$^3$) sont reliés entre eux, parmi :

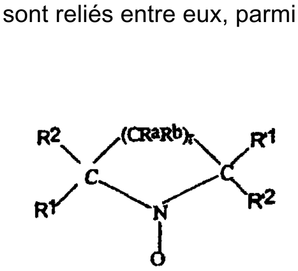

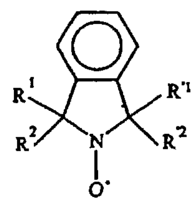

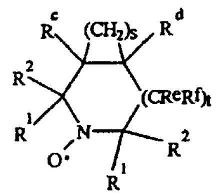

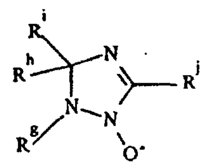

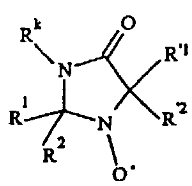

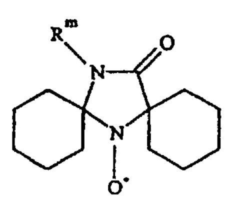

où :

- $R^a$ à $R^k$ et $R^m$ ont indépendamment les significations données pour $R^9$ à $R^{12}$, les $R^a$ et $R^b$ et $R^e$ et $R^f$ pouvant être identiques ou différents lorsqu'ils sont portés par des atomes de carbone différents ;
- r vaut 2 ou 3 ou 4 ;
- s est un entier non nul ; et
- t vaut 0, 1 ou 2.

**5.** Procédé selon l'une des revendications 3 et 4, **caractérisé par le fait que** l'on choisit le ou les radicaux stables nitroxyde parmi :

- le 2,2,5,5 tétraméthyl-2-pyrrolidinyloxy ;
- le 3-carboxy-2,2,5,5-tétraméthyl-pyrrolidinyloxy ;
- le 2,2,6,6-tétraméthyl-1-pipéridinyloxy;
- le 4-hydroxy-2,2,6,6-tétraméthyl-1-pipéridinyloxy;
- le 4-méthoxy-2,2,6,6-tétraméthyl-1-pipéridinyloxy;
- le 4-oxo-2,2,6,6-tétraméthyl-1-pipéridinyloxy;

- le bis-(1-oxyl-2,2,6,6-tétraméthylpipéridine-4-yl)sébacate ;
- le 2,2,6,6-tétraméthyl-4-hydroxypipéridine-1-oxyl)monophosphonate ;
- le N-tertiobutyl-1-diéthylphosphono-2,2-diméthyl propyl nitroxyde ;
- le N-tertiobutyl-2-dibenzylphosphono-2,2-diméthyl propyl nitroxyde ;
- le N-tertiobutyl-1-di(2,2,2-trifluoroéthyl)phosphono-2,2-diméthyl propyl nitroxyde ;
- le N-tertiobutyl-[(1-diéthylphosphono)-2-méthylpropyl]nitroxyde ;
- le N-(1-méthyléthyl)-1-cyclohexyl-1-(diéthylphosphono)nitroxyde ;
- le N-(1-phénylbenzyl)-[(1-diéthylphosphono)-1-méthyl éthyl] nitroxyde ;
- le N-phényl-1-diéthylphosphono-2,2-diméthyl propyl nitroxyde ;
- le N-phényl-1-diéthylphosphono-1-méthyl éthyl nitroxyde ;
- le N-(1-phényl 2-méthyl propyl)-1-diéthylphosphono-1-méthyl éthyl nitroxyde ;
- le N-tertiobutyl-1-phényl-2-méthyl propyl nitroxyde ; et
- le N-tertiobutyl-1-(2-naphtyl)-2-méthyl propyl nitroxyde.

**6.** Procédé selon la revendication 1, **caractérisé par le fait que** l'on utilise le 2,4,6-tri-tert.-butylphénoxy comme radical libre stable.

**7.** Procédé selon l'une des revendications 1 à 6, **caractérisé par le fait que** l'on incorpore à la résine à l'état visqueux de 1 ppm à 5 % en poids d'au moins un radical libre stable par rapport à ladite résine.

**8.** Procédé selon la revendication 7, **caractérisé par le fait que** l'on incorpore à la résine à l'état visqueux de 10 ppm à 5 % en poids d'au moins un radical libre stable par rapport à ladite résine.

**9.** Procédé selon l'une des revendications 1 à 8, **caractérisé par le fait que** l'on incorpore à la résine à l'état visqueux au moins un amorceur de polymérisation radicalaire dans une quantité suffisante pour obtenir, après réaction, la résine avec la viscosité souhaitée.

**10.** Procédé selon la revendication 9, **caractérisé par le fait que** l'on choisit le ou les amorceurs de polymérisation radicalaire parmi les peroxydes de diacyle, les peroxyesters, les peroxycétals, les peroxydes de dialkyle, les hydroperoxydes, les peroxydicarbonates, les esters azoïques et les peroxyphtalides.

**11.** Procédé selon la revendication 10, **caractérisé par le fait que** l'on choisit le ou les amorceurs de polymérisation radicalaire parmi :

. le peroxyde de benzoyle ;
. le peroxyde de lauroyle ;
. le peroxyde de décanoyle ;
. le peroxyde de 3,5,5-triméthylhexanoyle ;
. le peroxyde d'acétyle et de cyclohexyl sulfonyle ;

. le peroxybenzoate de tert.-butyle ;
. le peroxyacétate de tert.-butyle ;
. le peroxy-3,5,5-triméthylhexanoate de tert.-butyle ;
. le peroxy-3,5,5-triméthylhexanoate de tert.-amyle ;
. le 2,5-diméthyl-2,5-di(benzoylperoxy)hexane ;
. le OO-tert.-butyl-O-isopropyl-monoperoxy carbonate ;
. le OO-tert.-butyl-O-(2-éthylhexyl)monoperoxy carbonate ;
. le OO-tert.-amyl-O-(2-éthylhexyl)monoperoxy carbonate ;
. le peroxyisobutyrate de tert.-butyle ;
. le peroxy-2-éthylhexanoate de tert.-butyle ;
. le peroxy-2-éthylhexanoate de tert.-amyle ;

- le 2,5-diméthyl-2,5-di(2-éthylhexanoyl peroxy)hexane ;
- le peroxypivalate de tert.-butyle ;
- le peroxypivalate de tert.-amyle ;
- le peroxynéodécanoate de tert.-butyle ;
- le peroxyisononanoate de tert.-butyle ;
- le peroxynéodécanoate de tert.-amyle ;
- le peroxynéodécanoate d'$\alpha$-cumyle ;
- le 3-hydroxy-1,1-diméthylbutyl-peroxynéodécanoate ;
- le peroxymaléate de tert.-butyle ;
- le 3,3-di(tert.-butylperoxy)butyrate d'éthyle ;
- le 3,3-di(tert.-amylperoxy)butyrate d'éthyle ;
- le 4,4-di(tert.-butylperoxy)valérate de n-butyle ;
- le 2,2-di(tert.-butylperoxy)butane ;
- le 1,1-di(tert.-butylperoxy)cyclohexane ;
- le 1,1-di(tert.-butylperoxy)cyclohexane ;
- le 1, 1-di (tert.-butylperoxy)3,3,5-triméthylcyclohexane ;
- le 1,1-di(tert.-amylperoxy)cyclohexane ;
- le 2,2-bis-(4,4-ditert.-butyl peroxy cyclohexyl) propane) ;

- le 2,5-diméthyl-2,5-di(tert.-butylperoxy)hexyne-(3);
- le peroxyde de di-tert.-butyle ;
- le peroxyde de di-tert.-amyle ;
- le peroxyde de tert.-butyle et de cumyle ;
- le 1,3-di(tert.-butylperoxy-isopropyl)-benzène ;
- le 2,5-diméthyl-2,5-di(tert.-butylperoxy)hexane;
- le 1,1,4,4,7,7-hexaméthylcyclo-4,7-diperoxynonane;
- le 3,3,6,6,9,9-hexaméthylcyclo-1,2,4,5-tétraoxanonane ;

- l'hydroperoxyde de tert.-butyle ;
- l'hydroperoxyde de tert.-amyle ;
- l'hydroperoxyde de cumyle ;
- le 2,5 diméthyl-2,5-di(hydroperoxy)hexane;
- le mono hydroperoxyde de diisopropylbenzène ;
- l'hydroperoxyde de paramenthane ;

- le peroxydicarbonate de di-(2-éthylhexyle) ;
- le peroxydicarbonate de dicyclohexyle ;

- le 2,2'-azo-di(2-acétoxypropane) ;
- le 2,2'-azobis(isobutyronitrile) ;
- le 2,2'-azobis(2,4-diméthylvaléronitrile);
- le 2,2'-azobis(cyclohexanenitrile) ;
- le 2,2'-azobis-(2-méthylbutyronitrile) ;
- le 2,2'-azobis(2,4-diméthyl-4-méthoxyvaléronitrile); et
- le 3-phényl-3-tert.-butyl-peroxyphtalide.

**12.** Procédé selon l'une des revendications 9 à 11, **caractérisé par le fait que** l'on incorpore le ou les amorceurs de polymérisation radicalaire dans une quantité allant jusqu'à 5 % en poids par rapport au poids de la résine.

**13.** Procédé selon la revendication 12, **caractérisé par le fait que** l'on incorpore le ou les amorceurs de polymérisation radicalaire à raison de 50 ppm à 0,5 % en poids par rapport au poids de la résine.

**14.** Procédé selon l'une des revendications 9 à 13, **caractérisé par le fait que** l'on utilise un rapport $SFR \bullet F_{SFR}/AMO \bullet F_{AMO}$ de 0,0001 à 2,5, avec :

- SFR représentant le nombre de mole de radical libre stable dans le milieu,
- $F_{SFR}$ représentant la fonctionnalité du radical libre stable, c'est-à-dire le nombre de sites sur la même molécule de radical libre stable présentant l'état de radical libre stable ;

- AMO représentant le nombre de mole d'amorceur dans le milieu ;
- $F_{AMO}$ représentant la fonctionnalité de l'amorceur, c'est-à-dire le nombre de sites présentant l'état de radical libre que chaque molécule d'amorceur est capable de générer.

**15.** Procédé selon la revendication 14, **caractérisé par le fait que** l'on utilise un rapport $SFR \cdot F_{SFR}/AMO \cdot F_{AMO}$ de 0,005 à 2,5.

**16.** Procédé selon l'une des revendications 1 à 15, **caractérisé par le fait que** l'on utilise, comme résine de départ, un homopolymère du propylène.

**17.** Procédé selon l'une des revendications 1 à 15, **caractérisé par le fait que** l'on utilise, comme résine de départ, un copolymère du propylène, statistique ou à blocs, le ou les comonomères représentant jusqu'à 10% en poids dudit copolymère.

**18.** Procédé selon la revendication 17, **caractérisé par le fait que** le ou les comonomères sont choisis parmi les alkylènes, les diènes et les monomères vinylaromatiques.

**19.** Procédé selon l'une des revendications 1 à 15, **caractérisé par le fait que** l'on utilise, comme résine de départ, un homopolymère du propylène et/ou un copolymère du propylène tel que défini à la revendication 17, en mélange avec au moins un autre polymère choisi parmi le polyéthylène, le polystyrène, le poly(méthacrylate de méthyle), le polybutadiène, un EPDM (copolymère éthylène-propylène-diène monomère), un copolymère éthylène-acrylate, un copolymère éthylène - acide acrylique, un terpolymère éthylène - acrylate - anhydride maléique.

**20.** Procédé selon l'une des revendications 1 à 15, **caractérisé par le fait que** l'on utilise, comme résine de départ, un homopolymère du propylène et/ou un copolymère du propylène tel que défini à la revendication 17, en mélange avec au moins un autre polymère, ledit ou lesdits autres polymères représentant au plus 50% en poids du mélange.

**21.** Procédé selon l'une des revendications 1 à 20, **caractérisé par le fait que** l'on introduit le ou les radicaux libres stables, et, le cas échéant, le ou les amorceurs, dans au moins une zone fondue de l'extrudeuse située à la sortie du réacteur de synthèse de l'homopolymère ou du copolymère de propylène, ou dans au moins une zone fondue de l'extrudeuse utilisée en reprise de synthèse de l'homopolymère ou du copolymère du propylène, ou encore dans une autre extrudeuse qui ne se trouve pas nécessairement en sortie du réacteur de polymérisation, auquel cas on alimente dans l'extrudeuse tous les produits que l'on souhaite incorporer dans la formulation.

**22.** Procédé selon la revendication 21, **caractérisé par le fait que** l'on réalise la mise en contact de la résine à l'état visqueux et du radical stable ou des radicaux stables, et, le cas échéant, du ou des amorceurs de polymérisation radicalaire, et, le cas échéant, du ou des autres polymères, à une température de 100°C à 350°C.

**23.** Procédé selon la revendication 22, **caractérisé par le fait que** l'on réalise la mise en contact de la résine à l'état visqueux et du radical stable ou des radicaux stables, et, le cas échéant, du ou des amorceurs de polymérisation radicalaire, et, le cas échéant, du ou des autres polymères, à une température de 160°C à 250°C.

**24.** Procédé selon l'une des revendications 21 à 23, **caractérisé par le fait que** l'on réalise la mise en contact de la résine à l'état visqueux et du radical stable ou des radicaux stables, et, le cas échéant, du ou des amorceurs de polymérisation radicalaire, et, le cas échéant, du ou des autres polymères, pendant une durée de 10 secondes à 5 heures.

**25.** Procédé selon la revendication 24, **caractérisé par le fait que** l'on réalise la mise en contact de la résine à l'état visqueux et du radical stable ou des radicaux stables, et, le cas échéant, du ou des amorceurs de polymérisation radicalaire, et, le cas échéant, du ou des autres polymères, pendant une durée de 10 secondes à 1 heure, en particulier de 15 secondes à 1 minute.

**26.** Procédé selon l'une des revendications 21 à 25, **caractérisé par le fait que** l'on introduit le ou les radicaux libres stables et, le cas échéant, le ou les amorceurs, en solution dans un solvant.

**27.** Procédé selon la revendication 26, **caractérisé par le fait que** l'on utilise le trichlorobenzène comme solvant.

**28.** Procédé selon la revendication 27, **caractérisé par le fait que** l'on introduit la solution du ou des radicaux stables

et, le cas échéant, du ou des amorceurs, à un débit d'injection de 0,01-5% en poids du débit total.

**29.** Procédé selon l'une des revendications 1 à 20, **caractérisé par le fait que** l'on introduit le ou les radicaux stables et, le cas échéant, le ou les amorceurs de polymérisation, dans la résine de départ placée en milieu solvant, à une température de 80°C à 350°C.

**30.** Procédé selon la revendication 29, **caractérisé par le fait que** le solvant est choisi parmi les hydrocarbures aliphatiques, cycloaliphatiques et aromatiques, le cas échéant halogénés (chlorés).

**31.** Procédé selon l'une des revendications 1 à 30, **caractérisé par le fait qu'**un amorceur est présent pour une température inférieure à 200°C.

**32.** Procédé selon l'une des revendications 1 à 30, **caractérisé par le fait qu'**il n'y a pas d'amorceur pour une température se situant au-dessus de 200°C.

### Claims

**1.** Process for the production of a controlled-rheology resin of a propylene homopolymer or copolymer or a composition that comprises a propylene homopolymer or copolymer in the absence of a functional monomer, whereby said process brings about an increase of the fluidity index of the resin by cuts of the chains, **characterized by** the fact that at least one stable free radical is incorporated into said resin in the viscous state, and then a solid product that has an increased fluidity index is formed.

**2.** Process according to claim 1, wherein the stable free radical or radicals is or are selected from among the nitroxyl radicals that comprise at least one = N-O• group.

**3.** Process according to claim 2, wherein the nitroxyl radicals are selected from among those of formulas (Ia), (Ib) or (Ic) :

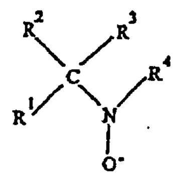

(Ia)

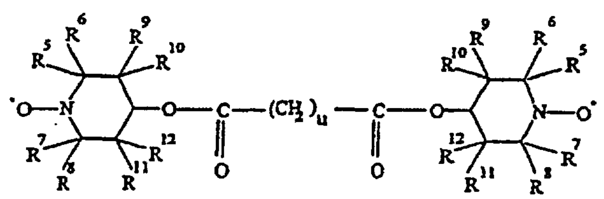

(Ib)

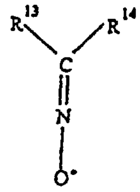

(Ic)

in which :

- $R^1$ to $R^3$, $R^5$ to $R^8$, and $R^{13}$ and $R^{14}$ each represent independently :

  (a) a hydrogen atom ;
  (b) a halogen atom ;
  (c) a hydrocarbon-containing, saturated or unsaturated, linear, branched or monocyclic or polycyclic group that can be substituted by at least one halogen ;
  (d) an ester group $-OOOR^{15}$ or an alkoxyl group $-OR^{16}$, $R^{15}$ and $R^{16}$ that represent a hydrocarbon-containing group as defined in item (c) above ;
  (e) a group of formula

  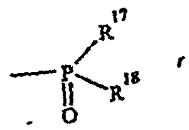

  where $R^{17}$ and $R^{18}$ each independently represent a linear, branched or cyclic alkyl radical, a perfluoroalkyl radical, aryl radical, aralkyl radical, alkaryl radical, alkoxyl radical, aryloxyl radical, aralkyloxyl radical, alkaryloxy radical, whereby these radicals can comprise 1 to 20 carbon atoms ; or halogen ;
  (f) a polymer chain ;

- $R^4$ has the meanings that are defined in items (a), (b), (c), (d) and (f) above, and in the case where it is connected to the nitrogen atom by a carbon atom, the latter can carry at least one group as defined in item (e) above ;
- $R^9$ to $R^{12}$, identical of different, have the meanings that are defined in items (a) to (f) above and can also represent a hydroxide group or an acid group, such as -COOH, $-PO(OH)_2$ or $-SO_3H$ ;
- $R^3$ and $R^4$ can be connected to one another - in the case where $R^4$ represents a radical $-CR'^1R'^2R'^3$ (whereby $R'^1$ to $R'^3$ equally have the meanings of $R^1$ to $R^3$) ; and $R^3$ can be connected to $R'^3$ - to form a heterocycle that comprises the nitrogen atom of

  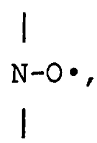

  whereby said heterocycle can be saturated or unsaturated, can comprise in the cycle at least one other heteroatom and/or at least one group

  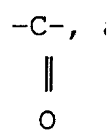

  and can also comprise a cycle that is attached, saturated or unsaturated ;
- two from among $R^1$ to $R^3$, $R^5$ and $R^6$, $R^7$ and $R^8$, $R^9$ and $R^{10}$, $R^{11}$ and $R^{12}$, $R^6$ and $R^9$, $R^8$ and $R^{11}$, $R^{13}$ and $R^{14}$ and - in the case where $R^4$ represents a radical $-CR'^1R'^2R'^3$, $R^3$ and $R'^3$ can be connected independently to one another to form, with the carbon atom that carries them, a saturated or unsaturated cycle or heterocycle ;
- u is a non-zero integer.

**4.** Process according to claim 3, wherein the nitroxyl radicals of formula (Ia), in which $R^3$ and $R^4$ (or $R^3$ and $R'^3$) are connected to one another, are selected from among :

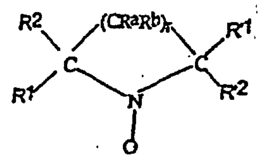

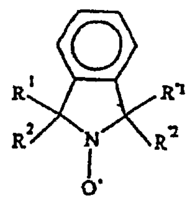

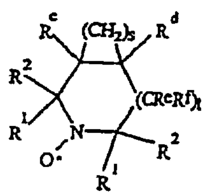

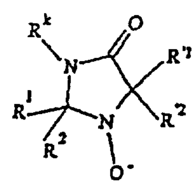

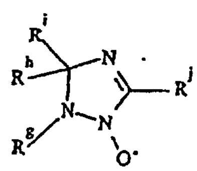

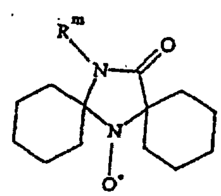

where :

- $R^a$ to $R^k$ and $R^m$ independently have the meanings that are given for $R^9$ to $R^{12}$, whereby $R^a$ and $R^b$ and $R^e$ and $R^f$ can be identical or different when they are carried by different carbon atoms ;
- r is equal to 2 or 3 or 4 ;
- s is a non-zero integer ; and
- t is equal to 0, 1 or 2.

**5.** Process according to one of claims 3 and 4, wherein the stable nitroxide radical or radicals is or are selected from among :

- 2,2,5,5-tetramethyl-1-pyrrolidinyloxy ;
- 3-carboxy-2,2,5,5-tetramethyl-pyrrolidinyloxy;
- 2,2,6,6-tetramethyl-1-piperidinyloxy ;
- 4-hydroxy-2,2,6,6-tetramethyl-1-piperidinyloxy ;
- 4-methoxy-2,2,6,6-tetramethyl-1-piperidinyloxy ;
- 4-oxo-2,2,6,6-tetramethyl-1-piperidinyloxy
- bis-(1-oxyl-2,2,6,6-tetramethylpiperidine-4-yl)sebacate ;
- 2,2,6,6-tetramethyl-4-hydroxypiperidine-1-oxyl)monophosphate ;
- N-tert-butyl-1-diethylphosphono-2,2-dimethyl propyl nitroxide ;

- N-tert-butyl-1-dibenzylphosphono-2,2-dimethyl propyl nitroxide ;
- N-tert-butyl-1-di(2,2,2-trifluoroethyl)phosphono-2,2-dimethyl propyl nitroxide ;
- N-tert-butyl-[ (1-diethylphosphono)-2-methyl-propyl] nitroxide ;
- N-(1-methylethyl)-1-cyclohexyl-1-(diethylphosphono) nitroxide ;
- N-(1-phenylbenzyl)-[ (1-diethylphosphono)-1-methyl ethyl] nitroxide ;
- N-phenyl-1-diethylphosphono-2,2-dimethyl propyl nitroxide ;
- N-phenyl-1-diethylphosphono-1-methyl ethyl nitroxide ;
- N-(1-phenyl 2-methyl propyl)-1-diethylphosphono)-1-methyl ethyl nitroxide ;
- N-tert-butyl-1-phenyl-2-methyl propyl nitroxide ; and
- N-tert-butyl-1-(2-naphthyl)-2-methyl propyl nitroxide.

**6.** Process according to claim 1, wherein 2,4,6-tri-tert-butylphenoxy is used as a stable free radical.

**7.** Process according to one of claims 1 to 6, wherein 1 ppm to 5% by weight of at least one stable free radical relative to the resin is incorporated into said resin in the viscous state.

**8.** Process according to claim 7, wherein 10 ppm to 5% by weight of at least one stable free radical relative to the resin is incorporated into said resin in the viscous state.

**9.** Process according to one of claims 1 to 8, wherein at least one radical-type polymerization trigger is incorporated into the resin in the viscous state in an adequate amount to obtain, after reaction, the resin with the desired viscosity.

**10.** Process according to claim 9, wherein the radical-type polymerization trigger or triggers is or are selected from among the diacyl peroxides, peroxyesters, peroxyketals, dialkyl peroxides, hydroperoxides, peroxydicarbonates, azo esters and peroxyphthalides.

**11.** Process according to claim 10, wherein the radical-type polymerization trigger or triggers is or are selected from among :

- benzoyl peroxide ;
- lauroyl peroxide ;
- decanoyl peroxide ;
- 3,5,5-trimethylhexanoyl peroxide ;
- acetyl cyclohexyl sulfonyl peroxide ;
- tert-butyl peroxybenzoate ;
- tert-butyl peroxyacetate ;
- tert-butyl peroxy-3,5,5-trimethylhexanoate ;
- tert-amyl peroxy-3,5,5-trimethylhexanoate ;
- 2,5-dimethyl-2,5-di(benzoylperoxy)hexane ;
- OO-tert-butyl-O-isopropyl-monoperoxy carbonate ;
- OO-tert-butyl-O-(2-ethylhexyl) monoperoxy carbonate ;
- OO-tert-amyl-O-(2-ethylhexyl) monoperoxy carbonate ;
- tert-butyl peroxyisobutyrate ;
- tert-butyl peroxy-2-ethylhexanoate ;
- tert-amyl peroxy-2-ethylhexanoate ;
- 2,5-dimethyl-2,5-di(2-ethylhexanoyl peroxy) hexane ;
- tert-butyl peroxypivalate ;
- tert-amyl peroxypivalate ;
- tert-butyl peroxyneodecanoate ;
- tert-butyl peroxyisononanoate ;
- tert-amyl peroxyneodecanoate ;
- $\alpha$-cumyl peroxyneodecanoate ;
- 3-hydroxy-1,1-dimethylbutyl-peroxyneodecanoate;
- tert-butyl peroxymaleate ;
- ethyl 3,3-di(tert-butylperoxy)butyrate;
- ethyl 3,3-di(tert-amylperoxy)butyrate ;
- n-butyl 4,4-di(tert-butylperoxy)valerate ;
- 2,2-di(tert-butylperoxy)butane ;

- 1,1-di(tert-butylperoxy)cyclohexane ;
- 1,1-di(tert-butylperoxy)cyclohexane ;
- 1,1-di(tert-butylperoxy)3,3,5-trimethylcyclohexane;
- 1,1-di(tert-amylperoxy)cyclohexane ;
- 2,2-bis-(4,4-ditert-butyl peroxy cyclohexyl)propane ;
- 2,5-dimethyl-2,5-di(tert-butylperoxy)hexyne-(3) ;
- di-tert-butyl peroxide ;
- di-tert-amyl peroxide ;
- tert-butyl cumyl peroxide ;
- 1,3-di(tert-butylperoxy-isopropyl)-benzene ;
- 2,5-dimethyl-2,5-di(tert-butylperoxy)hexane;
- 1,1,4,4,7,7-hexamethylcyclo-4,7-diperoxynonane ;
- 3,3,6,6,9,9-hexamethylcyclo-1,2,4,5-tetraoxa-nonane;
- tert-butyl hydroperoxide ;
- tert-amyl hydroperoxide ;
- cumyl hydroperoxide ;
- 2,5 dimethyl-2,5-di(hydroperoxy)hexane ;
- diisopropylbenzene mono hydroperoxide ;
- paramethane hydroperoxide ;
- di-(2-ethylhexyl) peroxydicarbonate ;
- dicyclohexyl peroxydicarbonate ;
- 2,2'-azo-di(2-acetoxypropane) ;
- 2,2'-azobis(isobutyronitrile) ;
- 2,2'-azobis(2,4-dimethylvaleronitrile);
- 2,2'-azobis(cyclohexanenitrile);
- 2,2'-azobis-(2-methylbutyronitrile) ;
- 2,2'-azobis(2,4-dimethyl-4-methoxyvaleronitrile); and
- 3-phenyl-3-tert-butyl-peroxyphtalide.

**12.** Process according to one of claims 9 to 11, wherein the radical type polymerization trigger or triggers is or are incorporated in an amount that ranges up to 5% by weight relative to the weight of the resin.

**13.** Process according to claim 12, wherein the radical type polymerization trigger or triggers is or are incorporated at a rate of 50 ppm at 0.5% by weight relative to the weight of the resin.

**14.** Process according to one of claims 9 to 13, wherein $SFR \bullet F_{SFR}/AMO \bullet F_{AMO}$ ratio of 0.0001 to 2.5 is used with :

- SFR representing the stable free radical mole number in the medium ;
- $F_{SFR}$ representing the functionality of the stable free radical, i.e. the number of sites on the same stable free radical molecule that exhibits the stable free radical state ;
- AMO representing the trigger mole number in the medium
- $F_{AMO}$ representing the functionality of the trigger, i.e., the number of sites that exhibit the free radical state that each trigger molecule is capable of generating.

**15.** Process according to claim 14, wherein an $SFR \bullet F_{SFR}/AMO \bullet F_{AMO}$ ratio of 0.005 to 2.5 is used.

**16.** Process according to one of claims 1 to 15, wherein a propylene homopolymer is used as a starting resin.

**17.** Process according to one of claims 1 to 15, wherein a copolymer of the statistical or block propylene is used as a starting resin, whereby the comonomer or comonomers represent up to 10% by weight of said copolymer.

**18.** Process according to claim 17, wherein the comonomer or comonomers is or are selected from among alkylenes, dienes and vinylaromatic monomers.

**19.** Process according to one of claims 1 to 15, wherein as a starting resin, a propylene homopolymer and/or a propylene copolymer as defined in claim 17 is used in a mixture with at least one other polymer that is selected from among polyethylene, polystyrene, poly(methyl methacrylate), polybutadiene, an EPDM (monomer ethylene-propylene-diene copolymer), an ethylene-acrylate copolymer, an ethylene-acrylic acid copolymer, an ethylene-acrylate-maleic anhydride terpolymer.

**20.** Process according to one of claims 1 to 15, wherein as a starting resin, a propylene homopolymer and/or a propylene copolymer as defined in claim 17 is used in a mixture with at least one other polymer, whereby said other polymer or polymers represent at most 50% by weight of the mixture.

**21.** Process according to one of claims 1 to 20, wherein the stable free radical or radicals, and, if necessary, the trigger or triggers, is or are introduced into at least one molten zone of the extruder located at the outlet of the reactor for synthesis of the propylene homopolymer or copolymer, or into at least one molten zone of the extruder that is used for repeat synthesis of the propylene homopolymer or copolymer, or else into another extruder that is not necessarily found at the outlet of the polymerization reactor, in which case all of the products that are to be incorporated into the formulation are fed into the extruder.

**22.** Process according to claim 21, wherein the resin in the viscous state and the stable free radical or stable radicals, and, if necessary, the radical-type polymerization trigger or triggers, and, if necessary, one other polymer or polymers are brought into contact at a temperature of 100°C to 350°C.

**23.** Process according to claim 22, wherein the resin in the viscous state and the stable radical or stable radicals, and, if necessary, radical-type polymerization trigger or triggers, and, if necessary, one other polymer or polymers are brought into contact at a temperature of 160°C to 250°C.

**24.** Process according to one of claims 21 to 23, wherein the resin in the viscous state and the stable radical or stable radicals, and, if necessary, the radical-type polymerization trigger or triggers, and, if necessary, one other polymer or polymers are brought into contact for a period of 10 seconds to 5 hours.

**25.** Process according to claim 24, wherein the resin in the viscous state and the stable radical or stable radicals, and, if necessary, the radical-type polymerization trigger or triggers, and, if necessary, one other polymer or polymers are brought into contact for a period of 10 seconds to 1 hour, in particular from 15 seconds to 1 minute.

**26.** Process according to one of claims 21 to 25, wherein the stable free radical or radicals, and, if necessary, the trigger or triggers is or are introduced into solution in a solvent.

**27.** Process according to claim 26, wherein the trichlorobenzene is used as a solvent.

**28.** Process according to claim 27, wherein the solution of the stable radical or radicals, and, if necessary, the trigger or triggers, is introduced at an injection flow rate of 0.01-5% by weight of the total flow rate.

**29.** Process according to one of claims 1 to 20, wherein the stable radical or radicals, and, if necessary, the polymerization trigger or triggers are introduced into the starting resin that is placed in the solvent medium at a temperature of 80°C to 350°C.

**30.** Process according to claim 29, wherein the solvent is selected from among the aliphatic, cycloaliphatic and aromatic hydrocarbons, if necessary, halogenated (chlorinated) hydrocarbons.

**31.** Process according to one of claims 1 to 30, wherein a trigger is present for a temperature that is less than 200°C.

**32.** Process according to one of claims 1 to 30, wherein there is no trigger for a temperature that is above 200°C.

## Patentansprüche

**1.** Verfahren zur Herstellung eines Harzes eines Propylenhomopolymers oder Propylencopolymers mit gesteuerter Rheologie oder einer Zusammensetzung, die ein Propylenhomopolymer oder Propylencopolymer in Abwesenheit des funktionellen Monomers enthält, wobei das Verfahren durch Kettenspaltung zu einer Erhöhung des Schmelzindex des Harzes führt, **dadurch gekennzeichnet, daß** in das Harz in viskosem Zustand mindestens ein stabiles freies Radikal eingearbeitet wird und dann ein stabiles Produkt mit einem höheren Schmelzindex gebildet wird.

**2.** Verfahren nach Anspruch 1, **dadurch gekennzeichnet, daß** das stabile freie Radikal oder die stabilen freien

Radikale unter den Nitroxyl-Radikalen ausgewählt sind, die mindestens eine Gruppe =N-O• enthalten.

3. Verfahren nach Anspruch 2, **dadurch gekennzeichnet, daß** die Nitroxyl-Radikale unter den Verbindungen der Formeln (Ia), (Ib) oder (Ic) ausgewählt sind:

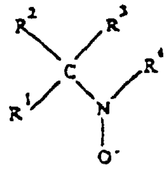

(Ia)

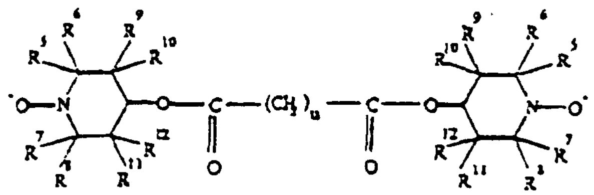

(Ib)

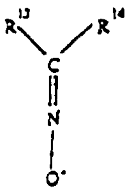

(Ic)

worin bedeuten:

- die Gruppen $R^1$ bis $R^3$, $R^5$ bis $R^8$ und $R^{13}$ und $R^{14}$ jeweils unabhängig voneinander:

  (a) ein Wasserstoffatom;
  (b) ein Halogenatom;
  (c) eine gesättigte oder ungesättigte, geradkettige, verzweigte oder mono- oder polycyclische Kohlenwasserstoffgruppe, die mit mindestens einem Halogen substituiert sein kann;
  (d) eine Estergruppe $-COOR^{15}$ oder eine Alkoxygruppe $-OR^{16}$, wobei $R^{15}$ und $R^{16}$ eine Kohlenwasserstoffgruppe bedeuten, wie sie oben unter Punkt (c) definiert wurde;
  (e) eine Gruppe der Formel

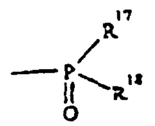 ,

wobei $R^{17}$ und $R^{18}$ jeweils unabhängig voneinander bedeuten: eine geradkettige, verzweigte oder cyclische Alkylgruppe, Perfluoralkyl, Aryl, Aralkyl, Alkaryl, Alkoxy, A-ryloxy, Aralkyloxy, Alkaryloxy, wobei diese Gruppen 1 bis 20 Kohlenstoffatome enthalten können; oder Halogen;
(f) eine Polymerkette;

- $R^4$ die Bedeutungen gemäß den oben angegebenen Punkten (a), (b), (c), (d) und (f); und falls $R^4$ an das Stickstoffatom über ein Kohlenstoffatom gebunden ist, kann dieses mindestens eine unter dem oben angegebenen Punkt (e) definierte Gruppe tragen;
- die Gruppen $R^9$ bis $R^{12}$, die gleich oder verschieden sind, die in den Punkten (a) bis (f) oben angegebenen Bedeutungen, wobei sie ferner eine Hydroxygruppe oder eine Säuregruppe bedeuten können, wie beispielsweise -COOH, $-PO(OH)_2$ oder $-SO_3H$;
- wobei die Gruppen $R_3$ und $R^4$ miteinander verbunden sein können und die Gruppe $R^3$, wenn $R^4$ eine Gruppe $-CR'^1R'^2R'^3$ bedeutet (wobei die Gruppen $R'^1$ bis $R'^3$ die Bedeutungen der Gruppen $R^1$ bis $R^3$ haben), an $R'^3$ gebunden sein kann, wodurch ein Heterocyclus gebildet wird, der das Stickstoffatom der Gruppe

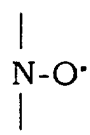

enthält, wobei der Heterocyclus gesättigt oder ungesättigt vorliegen und im Ring mindestens ein weiteres Heteroatom und/oder mindestens eine Gruppe

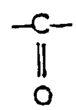

und ferner einen angehängten, gesättigten oder ungesättigten Ring enthalten kann;
- wobei zwei der Gruppen $R^1$ bis $R^3$, $R^5$ und $R^6$, $R^7$ und $R^8$, $R^9$ und $R^{10}$, $R^{11}$ und $R^{12}$, $R^6$ und $R^9$, $R^8$ und $R^{11}$, $R^{13}$ und $R^{14}$ und - falls $R^4$ eine Gruppe $-CR'^1R'^2R'^3$ bedeutet - $R^3$ und $R'^3$ unabhängig miteinander verbunden sein und mit dem Kohlenstoffatom, das sie trägt, einen gesättigten oder ungesättigten Ring oder einen gesättigten oder ungesättigten Heterocyclus bilden können;
- u eine ganze Zahl (nicht Null).

4. Verfahren nach Anspruch 3, **dadurch gekennzeichnet, daß** die Nitroxyl-Radikale der Formel (Ia), worin die Gruppen $R^3$ und $R^4$ (oder $R^3$ und $R'^3$) miteinander verbunden sind, unter den folgenden Verbindungen ausgewählt sind:

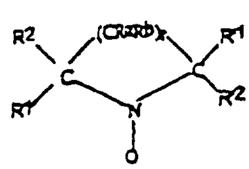

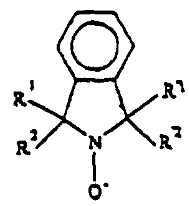

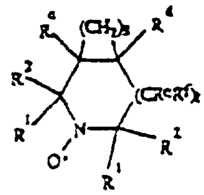

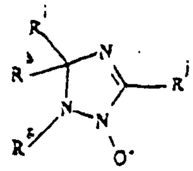

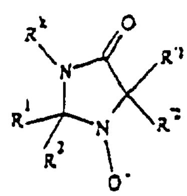

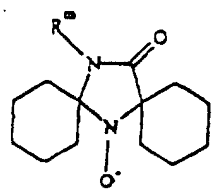

worin:

- die Gruppen $R^a$ bis $R^k$ und $R^m$ unabhängig voneinander die für die Gruppen $R^9$ bis $R^{12}$ angegebenen Bedeutungen aufweisen, wobei die Gruppen $R^a$ und $R^b$ und $R^e$ und $R^f$ identisch oder voneinander verschieden sein können, wenn sie von unterschiedlichen Kohlenstoffatomen getragen werden;
- r 2 oder 3 oder 4;
- s eine ganze Zahl (nicht Null); und
- t 0, 1 oder 2.

**5.** Verfahren nach einem der Ansprüche 3 und 4, **dadurch gekennzeichnet, daß** das stabile Nitroxyl-Radikal oder die stabilen Nitroxyl-Radikale unter den folgenden Verbindungen ausgewählt sind:

- 2,2,5,5-Tetramethyl-1-pyrrolidinyloxy;
- 3-Carboxy-2,2,5,5-tetramethyl-pyrrolidinyloxy;
- 2,2,6,6-Tetramethyl-1-piperidinyloxy;
- 4-Hydroxy-2,2,6,6-tetramethyl-1-piperidinyloxy;
- 4-Methoxy-2,2,6,6-tetramethyl-1-piperidinyloxy;
- 4-Oxo-2,2,6,6-tetramethyl-1-piperidinyloxy;
- Bis-(1-oxyl-2,2,6,6-tetramethylpiperidin-4-yl)sebacat;
- 2,2,6,6-Tetramethyl-4-hydroxypiperidin-1-oxyl)monophosphonat;
- N-*t*-Butyl-1-diethylphosphono-2,2-dimethylpropylnitroxid;
- N-*t*-Butyl-1-dibenzylphosphono-2,2-dimethylpropylnitroxid;
- N-*t*-Butyl-1-di(2,2,2-trifluorethyl)phosphono-2,2-dimethylpropylnitroxid;
- N-t-Butyl-((1-diethylphosphono)-2-methylpropyl]nitroxid;
- N-(1-Methylethyl)-1-cyclohexyl-1-(diethylphosphono)nitroxid;
- N-(1-Phenylbenzyl)-1-[(1-diethylphosphono)-1-methylethyl]nitroxid;
- N-Phenyl- 1-diethylphosphono-2,2-dimethylpropylnitroxid;
- N-Phenyl-1-diethylphosphono-1-methylethylnitroxid;
- N-(1-Phenyl-2-methylpropyl)-1-diethylphosphono-1-methylethylnitroxid;
- N-*t*-Butyl-1-phenyl-2-methylpropylnitroxid; und
- N-*t*-Butyl-1-(2-naphthyl)-2-methylpropylnitroxid.

**6.** Verfahren nach Anspruch 1, **dadurch gekennzeichnet, daß** das 2,4,6-Tri-*t*-Butylphenoxy als stabiles freies Radikal verwendet wird.

**7.** Verfahren nach einem der Ansprüche 1 bis 6, **dadurch gekennzeichnet, daß** in das Harz in viskosem Zustand 1 ppm bis 5 Gew.-% mindestens eines stabilen freien Radikals, bezogen auf das Harz, eingearbeitet werden.

**8.** Verfahren nach Anspruch 7, **dadurch gekennzeichnet, daß** 10 ppm bis 5 Gew.-% mindestens eines stabilen freien Radikals, bezogen auf das Harz, in das Harz in viskosem Zustand eingearbeitet werden.

**9.** Verfahren nach einem der Ansprüche 1 bis 8, **dadurch gekennzeichnet, daß** in das Harz in viskosem Zustand mindestens ein Initiator der radikalischen Polymerisation in einer Menge eingearbeitet wird, die ausreicht, um nach der Umsetzung das Harz mit der gewünschten Viskosität zu erhalten.

**10.** Verfahren nach Anspruch 9, **dadurch gekennzeichnet, daß** der Initiator oder die Initiatoren der radikalischen Polymerisation unter den Diacylperoxiden, Peroxyestern, Peroxyketalen, Dialkylperoxiden, Hydroxyperoxiden, Peroxodicarbonaten, Azoestern und Peroxyphthaliden ausgewählt sind.

**11.** Verfahren nach Anspruch 10, **dadurch gekennzeichnet, daß** der oder die Initiatoren der radikalischen Polymerisation unter den folgenden Verbindungen ausgewählt sind:

- Benzoylperoxid;
- Lauroylperoxid;
- Decanoylperoxid;
- 3,5,5-Trimethylhexanoylperoxid;
- Acetylcyclohexylsulfonylperoxid;
- *t*-Butyl-peroxybenzoat;
- *t*-Butyl-peroxyacetat;
- *t*-Butyl-perohy-3,5,5-trimethylhexanoat;
- *t*-Amyl-peroxy-3,5,5-trimethylhexanoat;
- 2,5-Dimethyl-2,5-di(benzoylperoxy)hexan;
- 00-*t*-Butyl-0-isopropyl-monoperoxycarbonat;
- 00-*t*-Butyl-0-(2-ethylhexyl)-monoperoxycarbonat;
- 00-*t*-Amyl-0-(2-ethylhexyl)-monoperoxycarbonat;
- *t*-Butyl-peroxyisobutyrat;
- *t*-Butyl-peroxy-2-ethylhexanoat;

- *t*-Amyl-peroxy-2-ethylhexanoat;
- 2,5-Dimethyl-2,5-di(2-ethylhexanoylperoxy)hexan;
- *t*-Butyl-peroxypivalat;
- *t*-Amyl-peroxypivalat;
- t-Butyl-peroxyneodecanoat;
- *t*-Butyl-peroxyisononanoat;
- *t*-Amyl-peroxyneodecanoat;
- $\alpha$-Cumyl-peroxyneodecanoat;
- 3-Hydroxy-1,1-dimethylbutyl-peroxyneodecanoat;
- t-Butyl-peroxymaleat;
- Ethyl-3,3-di(*t*-butylperoxy)butyrat:

- Ethyl-3,3-di(*t*-amylperoxy)butyrat;
- N-Butyl-4,4-di(*t*-butylperoxy)valerat;
- 2,2-Di(*t*-butylperoxy)butan;
- 1,1- Di(*t*-butylperoxy)cyclohexan;
- 1,1- Di(*t*-butylperoxy)cyclohexan;
- 1,1-Di(*t*-butylperoxy)-3,3,5-trimethylcyclohexan;
- 1,1-Di(*t*-amylperoxy)cyclohexan;
- 2,2-Bis-(4,4-di-*t*-butylperoxycyclohexyl)propan;
- 2,5-Dimethyl-2,5-di(*t*-butylperoxy)hexin-(3);
- di-*t*-Butylperoxid;
- di-*t*-Amylperoxid;
- *t*-Butyl-cumylperoxid;
- 1,3-Di(*t*-butylperoxy-isopropyl)-benzol;
- 2,5-Dimethyl-2,5-di(*t*-butylperoxy)hexan;
- 1,1,4,4,7,7-Hexamethylcyclo-4,7-diperoxynonan;
- 3,3,6,6,9,9-Hexamethylcyclo-1,2,4,5-tetraoxanonan;
- *t*-Butyl-hydroperoxid;
- *t*-Amyl-hydroperoxid;
- Cumyl-hydroperoxid;
- 2,5-Dimethyl-2,5-di(hydroperoxy)hexan;
- Diisopropylbenzolmonohydroperoxid;
- p-Menthanhydroperoxid;
- Di-(2-Ethylhexyl)peroxydicarbonat;
- Dicyclohexyl-peroxyl-peroxydicarbonat;
- 2,2'-Azo-di(2-acetoxypropan);
- 2,2'-Azobis(isobutyronitril);
- 2,2'-Azobis(2,4-dimethylvaleronitril);
- 2,2'-Azobis(cyclohexannitril);
- 2,2'-Azobis-(2-methylbutyronitril);
- 2,2'-Azobis(2,4-dimethyl-4-methoxyvaleronitril); und
- 3-Phenyl-3-*t*-butyl-peroxyphthalid.

**12.** Verfahren nach einem der Ansprüche 9 bis 11, **dadurch gekennzeichnet, daß** der oder die Initiatoren der radikalischen Polymerisation in einem Mengenanteil bis zu 5 Gew.-%, bezogen auf das Gewicht des Harzes, eingearbeitet werden.

**13.** Verfahren nach Anspruch 12, **dadurch gekennzeichnet, daß** der oder die Initiatoren der radikalischen Polymerisation in einer Menge von 50 ppm bis 0,5 Gew.-%, bezogen auf das Gewicht des Harzes, eingearbeitet werden.

**14.** Verfahren nach einem der Ansprüche 9 bis 13, **dadurch gekennzeichnet, daß** ein Verhältnis SFR · $F_{SFR}$/AMO · $F_{AMO}$ von 0,0001 bis 2,5 eingesetzt wird, mit:

- SFR bedeutet die Molzahl des stabilen freien Radikals in dem Medium;
- $F_{SFR}$ bedeutet die Funktionalität des freien Radikals, d.h., die Anzahl der Stellen an einem Molekül des stabilen freien Radikals, die den Zustand des stabilen freien Radikals aufweisen;
- AMO bedeutet die Molzahl des Initiators in dem Medium; und

- $F_{AMO}$ bedeutet die Funktionalität des Initiators, d.h., die Anzahl der Stellen, die den Zustand des freien Radikals aufweisen, die jedes Initiatormolekül bilden kann.

**15.** Verfahren nach Anspruch 14, **dadurch gekennzeichnet, daß** bei einem Verhältnis SFR · $F_{SFR}$/AMO · $F_{AMO}$ von 0,005 bis 2,5 gearbeitet wird.

**16.** Verfahren nach einem der Ansprüche 1 bis 15, **dadurch gekennzeichnet, daß** als anfänglich eingesetztes Harz ein Propylenhomopolymer verwendet wird.

**17.** Verfahren nach einem der Ansprüche 1 bis 15, **dadurch gekennzeichnet, daß** als anfänglich eingesetztes Harz ein statistisches Propylencopolymer oder Propylenblockcopolymer verwendet wird, wobei das Comonomer oder die Comonomere bis zu 10 Gew.-% des Copolymers ausmachen.

**18.** Verfahren nach Anspruch 17, **dadurch gekennzeichnet, daß** das Comonomer oder die Comonomere unter den Alkylenen, Dienen und vinylaromatischen Monomeren ausgewählt sind.

**19.** Verfahren nach einem der Ansprüche 1 bis 15, **dadurch gekennzeichnet, daß** als anfänglich eingesetztes Harz ein Homopolymer von Propylen und/oder ein Copolymer von Propylen, wie es in Anspruch 17 definiert wurde, im Gemisch mit mindestens einem weiteren Polymer verwendet wird, das unter Polyethylen, Polystyrol, Poly(methylmethacrylat), Polybutadien, EPDM (Ethylen/Propylen/Dien-Copolymeren), Ethylen/Acrylat-Copolymeren, Ethylen/Acrylsäure-Copolymeren und Ethylen/Acrylat/Maleinsäureanhydrid-Terpolymeren ausgewählt ist.

**20.** Verfahren nach einem der Ansprüche 1 bis 15, **dadurch gekennzeichnet, daß** als anfänglich eingesetztes Harz ein Homopolymer von Propylen und/oder ein Copolymer von Propylen gemäß Anspruch 17 im Gemisch mit mindestens einem weiteren Polymer verwendet wird, wobei das weitere Polymer oder die weiteren Polymere höchstens 50 Gew.-% des Gemisches ausmachen.

**21.** Verfahren nach einem der Ansprüche 1 bis 20, **dadurch gekennzeichnet, daß** das stabile freie Radikal oder die stabilen freien Radikale und gegebenenfalls der Initiator oder die Initiatoren in mindestens eine Schmelzzone des Extruders, der sich am Auslaß des Reaktors für die Synthese des Homopolymers oder Copolymers von Propylen befindet, oder in mindestens eine Schmelzzone des Extruders, der zur Wiederaufnahme der Synthese des Homopolymers oder Copolymers von Propylen verwendet wird, oder in einen anderen Extruder gegeben werden, der sich nicht zwingend am Auslaß des Polymerisationsreaktors befindet, wobei in diesem Fall der Extruder mit allen Produkten gespeist wird, die in die Formulierung eingearbeitet werden sollen.

**22.** Verfahren nach Anspruch 21, **dadurch gekennzeichnet, daß** das Harz in viskosem Zustand und das stabile Radikal oder die stabilen Radikale und gegebenenfalls der Initiator oder die Initiatoren der radikalischen Polymerisation und gegebenenfalls das weitere Polymer oder die weiteren Polymere bei einer Temperatur von 100 bis 350 °C in Kontakt gebracht werden.

**23.** Verfahren nach Anspruch 22, **dadurch gekennzeichnet, daß** das Harz in viskosem Zustand und das stabile Radikal oder die stabilen Radikale und gegebenenfalls der Initiator oder die Initiatoren der radikalischen Polymerisation und gegebenenfalls das weitere Polymer oder die weiteren Polymere bei einer Temperatur von 160 bis 250 °C in Kontakt gebracht werden.

**24.** Verfahren nach einem der Ansprüche 21 bis 23, **dadurch gekennzeichnet, daß** das Harz in viskosem Zustand und das stabile Radikal oder die stabilen Radikale und gegebenenfalls der Initiator oder die Initiatoren der radikalischen Polymerisation und gegebenenfalls das weitere Polymer oder die weiteren Polymere während 10 Sekunden bis 5 Stunden in Kontakt gebracht werden.

**25.** Verfahren nach Anspruch 24, **dadurch gekennzeichnet, daß** das Harz in viskosem Zustand und das stabile Radikal oder die stabilen Radikale und gegebenenfalls der Initiator oder die Initiatoren der radikalischen Polymerisation und gegebenenfalls das weitere Polymer oder die weiteren Polymere während 10 Sekunden bis 1 Stunde und insbesondere 15 Sekunden bis 1 Minute in Kontakt gebracht werden.

**26.** Verfahren nach einem der Ansprüche 21 bis 25, **dadurch gekennzeichnet, daß** das stabile freie Radikal oder die stabilen freien Radikale und gegebenenfalls der Initiator oder die Initiatoren gelöst in einem Lösungsmittel zugegeben werden.

**27.** Verfahren nach Anspruch 26, **dadurch gekennzeichnet, daß** als Lösungsmittel das Trichlorbenzol verwendet wird.

**28.** Verfahren nach Anspruch 27, **dadurch gekennzeichnet, daß** die Lösung des stabilen Radikals oder der stabilen Radikale und gegebenenfalls des Initiators oder der Initiatoren mit einem Durchsatz von 0,01 bis 5 Gew.-% des Gesamtdurchsatzes zugegeben werden.

**29.** Verfahren nach einem der Ansprüche 1 bis 20, **dadurch gekennzeichnet, daß** das stabile Radikal oder die stabilen Radikale und gegebenenfalls der Initiator oder die Initiatoren der Polymerisation in das anfänglich in einem Lösungsmittelmedium vorliegende Harz bei einer Temperatur von 80 bis 350 °C eingearbeitet werden.

**30.** Verfahren nach Anspruch 29, **dadurch gekennzeichnet, daß** das Lösungsmittel unter den aliphatischen, cycloaliphatischen und aromatischen, gegebenenfalls halogenierten (chlorierten) Kohlenwasserstoffen ausgewählt ist.

**31.** Verfahren nach einem der Ansprüche 1 bis 30, **dadurch gekennzeichnet, daß** ein Initiator für eine Temperatur unter 200 °C vorliegt.

**32.** Verfahren nach einem der Ansprüche 1 bis 30, **dadurch gekennzeichnet, daß** kein Initiator für eine Temperatur im Bereich über 200 °C vorliegt.